# EUROPEAN PATENT SPECIFICATION

(11) **EP 3 135 100 B1**
(45) Date of publication and mention of the grant of the patent: **17.10.2018**
(21) Application number: 16182295.2
(22) Date of filing: 02.08.2016
(51) Int. Cl.: A01F 12/16, A01F 21/00, A01F 29/18, A01D 41/12, A01D 75/20, A01F 15/10

(54) **AGRICULTURAL HARVESTER COMPRISING A PROCESSING DEVICE AND A MONITORED COVER AND AGRICULTURAL PROCESSING METHOD**
LANDWIRTSCHAFTLICHE ERNTEMASCHINE MIT EINER VERARBEITUNGSVORRICHTUNG UND EINER ÜBERWACHTEN ABDECKUNG UND LANDWIRTSCHAFTLICHES VERARBEITUNGSVERFAHREN
MOISSONNEUSE AGRICOLE COMPRENANT UN DISPOSITIF DE TRAITEMENT ET COUVERCLE ET PROCÉDÉ DE TRAITEMENT AGRICOLE

(30) Priority: 26.08.2015 NL 2015349
(43) Date of publication of application: 01.03.2017
(73) Proprietor: Forage Company B.V., 3147 PB Maassluis (NL)
(72) Inventor: BERGMANN, Thomas, 3147 PB Maassluis (NL)
(74) Representative: AGCO Intellectual Property Department

(56) References cited:
- WO-A1-2014/128098
- WO-A1-2014/129892
- WO-A1-2015/009142
- US-A1- 2009 255 775

## Description

### FIELD OF THE INVENTION

The invention refers to an agricultural harvester for processing crop material and to a crop material processing method, in particular to a baler for forming round-cylindrical or cuboid bales from agricultural crop material which has previously been cut.

### BACKGROUND OF THE INVENTION

An agricultural harvester, e.g. a round or cuboid baler or a loader wagon, moves or is pulled over ground, picks up loose crop material from the ground or receives loose crop material in a further way, conveys the picked-up crop material through a feeding channel towards a chamber, optionally cuts, threshes, or otherwise processes the conveyed crop material in the feeding channel, and injects the conveyed and processed crop material into a chamber, e.g. into a pressing chamber of a baler, into a threshing chamber of a combine harvester or field chopper, or into a storing room of a loader wagon.

A processing device, e.g. a cutting assembly, engages into the feeding channel when being in a processing position. A conveying device and the processing device cooperate and process, e.g. cut, the conveyed crop material.

Sometimes it is required to transfer the processing device into a non-processing position, e.g. for performing maintenance. Examples for the case of a cutting assembly are that the knives are grinded or a broken knife is replaced with a new one. For performing the maintenance the processing device is typically shifted into a lateral non-processing position. Several proposals how to do so have been made.

In DE 102006036199 A1 a positioning member (two vertical hydraulic piston-cylinder devices) can lower down and lift up the entire feeding channel bottom (there called guiding surface) together with a processing device in the form of a cutting assembly positioned below the feeding channel. The cutting assembly comprises several knives which engage into the feeding channel when the cutting assembly is lifted. The cutting assembly is carried by the guiding surface. In addition the cutting assembly can be shifted laterally with respect to the channel bottom. For enabling this lateral movement several idler rollers belonging to a slide of the cutting arrangement run in corresponding guiding rails mounted at the guiding surface. The cutting assembly is shifted laterally in a manual manner or by means of a motor, cf. par. [0042].

In WO 2014129892 A1 it is suggested to divide the channel bottom into a front part carrying the cutting assembly and a rear part. The entire front part (cutting area bottom) together with the cutting assembly can be shifted laterally. In one embodiment two horizontal hydraulic piston-cylinder units can automatically shift the cutting area bottom to the left or to the right. In addition a positioning member (two vertical hydraulic cylinders) can lower down and lift up the front part together with the cutting arrangement.

Several proposals how to protect a human operator have been made.

WO 2015009142 A1 discloses a round baler with two lateral cover plates for covering the sidewalls of the pressing chamber. Every cover plate is pivotally connected with the corresponding adjacent sidewall by means of a guiding assembly which comprises three parallel bearing units. The cover plate can be moved between a covering position and an access-enabling position by a movement along a curved trajectory.

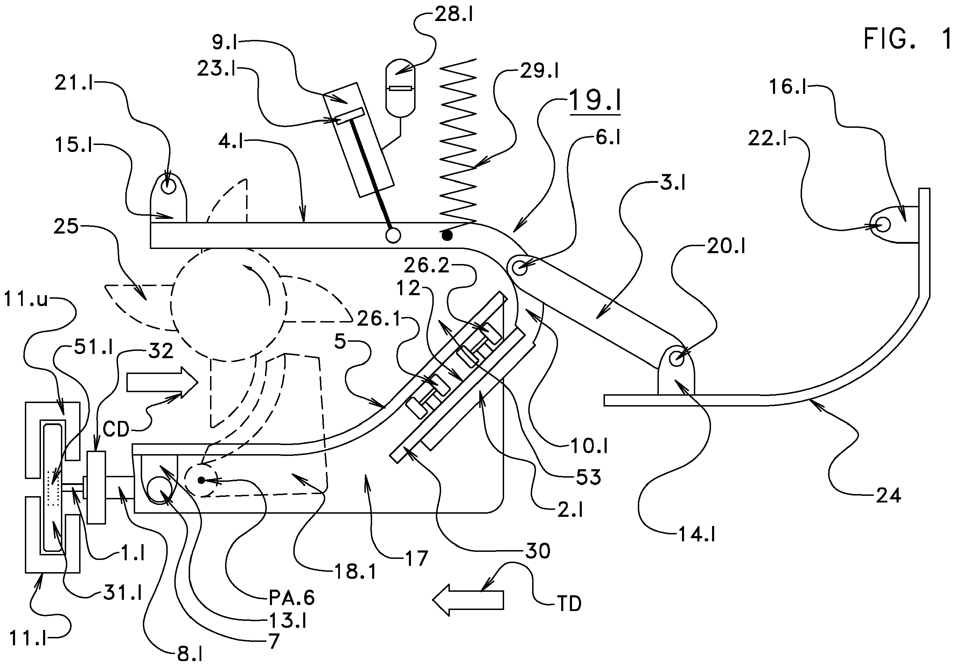

US 20090255775 A1 discloses an agricultural combination comprising a pulling tractor 10 and a round baler 12, cf. Fig. 1. The forward upper region of the round baler 12 is covered to the outside by a cover arrangement 62. In the closed position the cover 62 covers several rollers 56 to the outside and prevents an operator or a further person from reaching into the interior of the round baler 12. A sensor 66 is associated with the cover 62 and responds upon opening of the cover 62. The sensor 66 may be a mechanical switch which is actuated by the cover 62 or a magnetic sensor implemented by using metallic material or a permanent magnetic. The cover sensor 66 is connected with an electronic control unit 68 of the round baler. The baler control unit 68 is connected over a data bus 70 with a control unit 34 of the tractor 10. When the sensor 66 detects the situation that the cover 62 is in the open position, an alert is generated and transmitted to the tractor control unit 34. The tractor control unit 34 triggers an actuator 38 to move into a position in which a clutch 26 for the tractor PTO shaft is disengaged. Thereby the drive shaft 64 of the round baler 12 is no longer rotated. As soon as the cover sensor 66 detects that the cover 62 has been closed, the tractor control unit 34 triggers the actuator 38 to engage the clutch 26 again.

WO 2014128098 A1 discloses a cuboid baler 70 which forms cuboid bales in a pressing chamber 80. A main input shaft causes a plunger 13 to oscillate within the pressing channel 80. The rotated main input shaft rotates a flywheel 2. A disc brake system or drum brake system 40 can decelerate and stop the flywheel 2, cf. p.2. A brake controller 47 can activate the brake 40 such that the flywheel 2 is stopped and/or held. In one embodiment a sensor 43 detects if a door or panel is open, cf. p. 13, l. 19-21. If the sensor 43 detects an open door or panel, the sensor 43 sends a signal to the brake controller 47 such that the brake controller 47 activates the brake 40.

### SUMMARY OF THE INVENTION

A problem solved by the invention is to provide an agricultural harvester with the features of the preamble of claim 1 and a crop material processing method with the features of the preamble of claim 13 wherein a human operator is even better protected and wherein the risk of a damage of a harvester part is reduced.

This problem is solved by an agricultural harvester with the features of claim 1 and by a crop material processing method with the features of claim 13. Preferred embodiments are specified in the depending claims.

The harvester according to the invention comprises
- a conveying device,
- a processing device,
- at least one processing device actuator,
- at least one movable cover,
- at least one cover position sensor assigned to the or one cover, and
- a chamber surrounded by at least one side wall.

The conveying device engages into a feeding channel. This feeding channel guides into the chamber. The chamber is arranged to contain loose crop material. The conveying device can convey loose crop material through the feeding channel into a conveying direction towards the chamber.

The processing device can be operated in a processing position in which it engages into the feeding channel and cooperates with the conveying device for processing conveyed crop material. The processing device can be moved away from the conveying device into a central remote position in which the processing device has a larger distance to the conveying device and does no longer cooperate with the conveying device.

The processing device can further be moved with respect to the conveying device from the central remote position into at least one lateral remote position. The terms "central" and "lateral" refer to the feeding channel and to the conveying direction, resp. In the or every lateral remote position the processing device has a lateral offset to a vertical center plane of the harvester. This movement into the or one lateral remote position is performed in a lateral moving direction perpendicular or angular to a conveying direction in which the conveying device can convey loose crop material through the feeding channel. When being moved into the or one lateral moving direction, the processing device is moved towards the or one cover. The or at least one processing device actuator is arranged to perform this movement.

The or every movable cover is mounted such that it can be moved between
- a covering position and
- an access-enabling position.

The cover being in the covering position covers one side of the entire feeding channel or of a feeding channel part and / or of an entire side wall or a side wall part of the chamber. The cover being in the access-enabling position enables a human operator or a manipulator to have access from outside to the feeding channel and / or to the chamber side wall.

The harvester according to the invention operates as follows and the processing method comprises the following steps:
- The conveying device conveys loose crop material in the conveying direction through the feeding channel towards the chamber. The processing device is at least temporarily in the processing position while the crop material is conveyed.
- The processing device being in the processing position and the conveying device cooperate such that crop material which is conveyed through the feeding channel is processed.
- The cover is in the covering position while the crop material is conveyed through and processed in the feeding channel.
- The conveyed and processed crop material is injected into the chamber.

The following moving sequence can be performed at least once:
- The step of conveying crop material through the feeding channel is interrupted.
- The processing device is moved out of the processing position into the central remote position. Thanks to this movement the distance to the conveying device is increased.
- A request for moving the processing device from the central remote position into the or one lateral remote position, thereby moving it towards the or one cover, is received.
- The or one cover position sensor monitors whether this cover is currently in the covering position or in the access-enabling position.
- If the cover position sensor detects that this cover is in the access-enabling position, the or one processing device actuator moves the processing device from the central remote position into the or the requested lateral remote position. This movement is performed in a lateral moving direction which is perpendicular or angular to the conveying direction and points towards this cover.
- The harvester inhibits the processing device actuator to move the processing device towards the cover into the lateral remote position if the cover position sensor has detected that the cover being adjacent to the requested lateral remote position is in the covering position.
- Thanks to this position check it is automatically inhibited that the moved processing device hits the cover being in the covering position.

### ADVANTAGES

According to the invention the processing device being in the processing position cooperate with the conveying device. The processing device in the processing position and the conveying device cooperate and engage from two sides into the feeding channel, cooperate, and process conveyed crop material. The crop material is conveyed and processed with a higher reliability and performance compared with being processed by a device which engages only from one side into the feeding channel.

The processing device can be moved from the processing position into the central remote position-remote from the conveying device and preferably remote from the feeding channel. According to the invention the distance between the processing device and the conveying device is increased when the processing device is moved from the processing position into the central remote position. In this central remote position the cross section of the feeding channel is increased. The increased cross section helps to avoid or at least to remove a jam of crop material in the feeding channel. Often an actuator or further device for such a movement is already implemented on board of the harvester, in particular for avoiding or resolving a jam of crop material in the feeding channel.

The or one processing device actuator can further move the processing device from this central remote position with respect to the conveying device into the or one lateral remote position. In this lateral remote position it is possible to inspect and to clean or grease the processing device, to perform maintenance, or to remove a malfunction. In the case of a cutting assembly serving as the processing device it is possible that the knives of the cutting assembly are grinded or that a used or a broken knife is replaced with a new one when the processing device in the or one lateral remote position. Thanks to the lateral remote position the operator who performs the maintenance needs not to work below the harvester or on board of the harvester.

Thanks to the processing device actuator it is not necessary that a human operator manually moves the processing device currently being in the central remote position into the lateral remote position. Often the processing device is positioned slightly above the ground and has a considerable weight. For shifting the processing device in the presence of debris and / or dirt a high friction force has to be surpassed. Therefore it is often a non-ergonomic work for a human to manually move the processing device into the or one lateral remote position. The processing device actuator avoids the need of this non-ergonomic work. Thanks to the actuator the movement of the processing device is performed automatically and can even be triggered from a remote position, e.g. from the driver cabin or from a position beside the harvester.

The or every cover being in the covering position prevents that a human or other living being comes in contact with the processing device or with the conveying device or with a moving part protruding from the chamber side wall. An unintended contact could injure the living being. For moving the processing device into the or one lateral remote position the cover adjacent to this lateral remote position has to be moved from the covering position into an access-enabling position. Thanks to the invention the processing device can only be moved into the lateral remote position if this cover is in the access-enabling position. The lateral movement of the processing device towards the cover would or could hit the cover if the cover were in the covering position. Such a lateral movement while the cover is in the covering position would damage the cover as the shifted processing device may hit the cover, in particular if the cover is made of polymer or of a further light-weight material.

The processing device actuator can be triggered by a human operator from a remote position, e.g. from a lateral position or even from the driver's cabin. It is possible that the operator has no view onto the cover and does in particular not watch in what position the cover is currently positioned. Or the operator forgets to check the current cover position before triggering the movement of the processing device into the lateral remote position. Thanks to the assigned cover position sensor it is nevertheless inhibited that the processing device is shifted into the lateral remote position when this cover is in the covering position.

Thanks to the processing device actuator it is possible that the operator triggers with one input the process of moving the processing device from the processing position into the or one lateral position without the need of checking the cover position or monitoring displayed cover position indications.

Sometimes maintenance or repair work for the harvester is to be performed in a workshop. In particular in this situation the harvester may be moved into a position in which not enough space is available beside the harvester. While the processing device is moved into the lateral remote position, the processing device may hit a living being or an obstacle beside the harvester. Thanks to the invention the processing device can only be moved laterally when the cover is in the access-enabling position. This feature requires a check - at least by an operator or technician - if sufficient space beside the harvester is available.

### PREFERED EMBODIMENTS

In a preferred embodiment the harvester automatically inhibits the processing device actuator to move the processing device in the lateral moving direction towards the or one cover unless the assigned cover position sensor positively detects that this cover is in the access-enabling position. Thereby the lateral movement is also inhibited if the cover is in an intermediate position of if a sensor malfunction occurs or if a sensor signal is not properly transmitted or evaluated (fail-safe implementation).

In one implementation a closed-state signal is generated if the cover position sensor detects that the cover is in the covering position. An opened-state signal is generated if the cover position sensor detects that the cover is in the access-enabling position. The lateral movement is inhibited unless the opened-state signal is generated. In a preferred implementation the rotation of rotatable harvester parts is interrupted or inhibited unless the closed-state signal is generated.

In one implementation the harvester inhibits every lateral movement of the processing device towards the cover as long as the cover is closed (covering position). In an alternative implementation a lateral movement towards the or one cover is possible when the cover is closed. A lateral movement into the or the outermost lateral remote position, however, is inhibited. The processing device can only be moved from the central remote position into an intermediate lateral remote position in which it does not hit the closed cover. In one implementation the further lateral movement is inhibited as soon as the laterally moved processing device reaches a contact switch or other position sensor.

Different embodiments for the cover position sensor are possible. It is possible that two different sensors for the same cover are provided, preferably implemented in different ways.

In one embodiment the cover being in the covering position closes an electric loop. This electric loop is interrupted if the cover is moved out of the covering position, in particular if it is in the access-enabling position. It is also possible that the electric loop is closed when the cover is in the access-enabling position. An electric sensor detects whether or not this electric loop is currently closed. It is also possible that a first electric loop is closed when the cover is in the covering position and a second electric loop is closed when the cover is in the access-enabling position. The electric sensor further detects which loop is closed.

In a further embodiment an iron or other metallic element is mounted on the cover, preferably at a cover surface pointing to the chamber or feeding channel. A proximity sensor is mounted on board of the harvester but not at the cover, e.g. at a frame of the harvester or at a wall of the feeding channel or at the or one chamber side wall. If the cover is in the covering position - or in the access-enabling position - the metallic element is in the vicinity of the proximity sensor. The presence of the metallic element is detected by the proximity sensor. The proximity sensor generates a signal if it detects the presence of the metallic element. If the cover is in the other position, the proximity sensor does not detect the metallic element and does not generate the signal or generates an alternative signal. It is also possible that a first proximity sensor detects that the cover is in the covering position and that a second proximity sensor detects that the cover is in the access-enabling position. When the cover is in an intermediate position, no proximity sensor detects a metallic element.

In yet a further embodiment a contact switch is actuated if the cover is in the covering position - or in the access-enabling position. A sensor checks whether or not the contact switch is actuated. It is possible that a first contact switch for the covering position and a second contact switch for the access-enabling position are implemented.

In one implementation these three embodiments provide different fail-safe implementations: The signal that the cover is in the covering position is only generated if the covering position is positively detected. An automatic operation, e.g. a rotation of a harvester part, which requires that the or every cover is in the covering position is only triggered if this signal is transmitted. Even if no opened-state signal is generated it is not assumed that the cover is in the covering position. This assumption may be wrong in the case of a sensor malfunction. This embodiment is often desired for securing the human operator. The lateral movement of the processing device is only enabled if the access-enabling position is positively detected.

In a further embodiment a contact switch is actuated if the cover is in the access-enabling position. Or the proximity sensor detects the metallic element if the cover is in the access-enabling position. Or the electric loop is closed if the cover in the access-enabling position.

These embodiments provide different fail-safe implementations from a damage-avoiding perspective: The lateral movement of the processing device shift towards the or one cover is inhibited unless the cover position sensor has provided a signal that the cover is in the access-enabling position.

In one embodiment the distance between the cover on the one side and the adjacent feeding channel wall or chamber side wall on the other side is increased when the cover is moved from the covering position into the access-enabling position. If the distance is large enough a human operator can work in a position between the feeding channel or chamber side wall and the cover being in the access-enabling position. On the other hand the width of the harvester is as small as possible when the cover is in the covering position.

In one embodiment a cover actuator can move the or one cover against the force of gravity from the covering position into the access-enabling position. The actuator can comprise a hydraulic piston-cylinder unit or an electric motor or a sprocket wheel and a chain. Or a compressed helical spring or gas spring moves the cover. The embodiment with the cover actuator saves the need that a human operator moves the cover against the force of gravity. Preferably a locking device must be released for enabling a movement of the cover into the access-enabling position.

The invention increases the reliability of this embodiment with the cover actuator. The processing device may only be moved towards the or one cover if this cover is in the access-enabling position. It may happen that the cover actuator is triggered to open the cover but actually fails to move the cover into the access-enabling position, e.g. due to a malfunction of the cover actuator or as the triggering signal is not transmitted or as the cover is locked or blocked. Preferably the assigned cover position sensor checks whether or not the cover has actually been moved into the access-enabling position. Preferably the cover actuator moves the cover into the access-enabling position, e.g. after a corresponding input from a human operator, when a movement of the processing device into the or one lateral remote position is required and when it is detected that the cover is in the covering position. Preferably the processing device is only moved towards the cover if the access-enabling position is positively detected.

Preferably the request for moving the processing device into the or one lateral remote position adjacent to the or one cover is received from a human operator. It is possible that the request is received when the processing device is in the processing position. The request triggers the steps that
- the processing device is moved into the central remote position,
- the cover position sensor checks the position of this cover, and
- the processing device is moved into the lateral remote position if the cover is in the access-enabling position.

It is also possible that the request is received when the processing device is already in the central remote position.

The cover might hit a living being or an object when being moved into the access-enabling position. By this hit the living being may be injured and/or the object or the cover may be damaged. The following embodiment avoids this undesired event. An environment sensor detects whether or not a living being or an object is in the vicinity of the cover being in the covering position. The harvester inhibits the cover actuator to move the cover from the covering position into the access-enabling position if the environment sensor has detected a living being or object in the vicinity. Or the cover actuator only moves the cover when the environment sensor has positively detected that no living being and no object is in the vicinity of the closed cover.

It is possible that the movement of the processing device from the central into the or one lateral remote position would hit a living being or an object, e.g. by hitting the living being or object. In one implementation the environment sensor is used for enabling or inhibiting the processing device actuator to move the processing device. If the environment sensor detects a living being or an object which would or could be hit by the lateral movement of the processing device, this lateral movement is automatically inhibited. The environment sensor can be used together with the cover actuator or also be used when the cover can only manually be moved.

In one implementation a request for moving the processing device into the or one lateral remote position is generated as a reaction on a user input. This request triggers the cover position sensor to check the current position of the cover. If the cover is in the covering position, the environment sensor checks whether a living being or an object is in the vicinity of the cover. If no living being and no object are detected, the cover actuator moves the cover into the access-enabling position. Or the locking device is automatically released or can manually be released. The processing device actuator moves the processing device into the or one lateral remote position towards this cover, preferably after the cover position sensor positively detects the access-enabling position. Otherwise the locking device cannot be released and/or the cover actuator does not move the cover. Preferably a hint for a human operator is generated in this case.

In one embodiment a cover closing actuator can move the or one cover from the access-enabling position into the covering position. This movement must not be performed if the processing device is in the lateral remote position adjacent to this cover as the moved cover may hit the processing device being in the lateral remote position. For avoiding this undesired event the harvester inhibits the cover closing actuator to move the cover into the covering position if the processing device is in the lateral remote position adjacent to the cover to be closed. Preferably a processing device position sensor detects whether or not the processing device is in the lateral remote position. In one implementation a contact switch is actuated or an electric loop is closed by the processing device being in the lateral remote position - or being in the central remote position.

According to the invention the processing device can be moved with respect to the conveying device between the processing position, the central remote position, and the or one lateral remote position. Preferably the processing device is positioned vertically below or above the conveying device when the processing device is in the processing position or in the central remote position. In one implementation the processing device can be moved from the processing position into the central remote position by a pivotal or other movement in a vertical direction. Preferably the processing device can be moved from the central remote position into the lateral remote position by a movement in a horizontal direction or in an ascending direction wherein the direction of this movement is perpendicular or angular to the conveying direction. This movement can comprise a linear shift and/or a pivotal movement around a vertical pivoting axis.

Preferably the processing device being in the processing position and the conveying device engage from two opposing sides, preferably from above and from below, into the feeding channel. The loose crop material in the feeding channel is conveyed through a space occurring between the conveying device and the processing device being in the processing position.

In one embodiment the conveying device is positioned above the crop material in the feeding channel, e.g. engages from above into the feeding channel. The processing device being in the processing position engages from below into the feeding channel. In one implementation the feeding channel is positioned above a guiding surface forming a bottom of the feeding channel. The force of gravity tends to move the conveyed loose material away from the conveying device and towards the guiding surface and towards the processing device. This embodiment often helps to process the conveyed crop material.

In a further embodiment the conveying device is positioned below the crop material in the feeding channel, i.e. engages from below into the feeding channel. The processing device being in the processing position engages from above into the feeding channel. In one implementation a guiding surface is positioned above the feeding channel and protects a human operator from being injured by the processing device being positioned above the feeding channel. In this embodiment it may be easier to get access to the processing device.

It is also possible that the conveying device is positioned beside the feeding channel.

In one embodiment the processing device is implemented as a or comprises a cutting assembly. This cutting assembly can be moved into a cutting position serving as the processing position and into the central remote position and into the or at least one lateral remote position. The cutting assembly being in the cutting position and the conveying device engage into the feeding channel, preferably from two opposing sides. They cooperate and cut loose crop material which is conveyed through the feeding channel. Thanks to the cutting assembly the loose crop material which reaches the chamber is cut into pieces. The injected loose material can better be stored or pressed or otherwise processed in the chamber as in general every crop material piece has a size smaller than a given maximal size after the loose material is cut. More loose material can be injected into the chamber if the loose material is cut in the feeding channel. The risk of a jam decreases. Therefore a higher density of processed crop material and a more uniform density distribution can be achieved.

Preferably the cutting assembly comprises several knives which are stationary as long as the cutting assembly remains in the cutting position. The conveying device conveys the loose crop material along the knives such that the stationary knives engage into the conveyed crop material and cut it. The conveying device may comprise a conveying rotor with several conveying tines or stuffing tines or a piston or at least one conveying belt.

In a further embodiment the knives of the cutting assembly are moved, e.g. rotated, while the cutting assembly is in the cutting position. The knives can be moved in the conveying direction or opposite to the conveying direction. Preferably the movement of the knives is automatically stopped when the cutting assembly is moved out of the cutting position. It is also possible that the conveying device operates as a further cutting assembly cooperating with the cutting assembly being in the cutting position.

In a further embodiment the processing device threshes or shakes or conveys or otherwise processes the crop material. The processing device may comprise a mechanical filter or sieve for separating the conveyed crop material into two different subsets according to the size of the crop material pieces.

According to the invention the processing device can be moved with respect to the conveying device into the processing position, the central remote position, and the or one lateral remote position. In one embodiment the processing device can be moved with respect to a guiding surface which forms one wall of the feeding channel. The processing device being in the processing position penetrates the guiding surface for engaging into the feeding channel. Preferably the processing device being in the processing position engages from below or from above through the guiding surface into the feeding channel. In one implementation the processing device being in the central remote position still penetrates the guiding surface but with a smaller amount. In a further implementation the processing device being in the central remote position is entirely positioned outside of the feeding channel.

When the processing device is in the central or in the or one lateral remote position, the guiding surface is positioned between the processing device and the conveying device. In one implementation the processing device actuator can move the processing device laterally with respect to the guiding surface into the or one lateral remote position when the processing device is moved into the central remote position and does no longer penetrate the guiding surface.

In a further embodiment the guiding surface itself is moveable with respect to the conveying device from an aligned position into at least one lateral position. The processing device is mounted at the guiding surface and can be moved into the lateral remote position by moving the guiding surface into the lateral position. In addition the processing device is preferably moveable with respect to the guiding surface from a position in which it engages through the guiding surface into a non-engaging or less engaging position. By moving the guiding surface into the lateral position and the processing device into the non-engaging position, the processing device is moved from the processing position into the or one lateral remote position. It is possible that the guiding surface can selectively be moved to the left or to the right with respect to the conveying direction.

It is possible that both embodiments are combined with each other, i.e.
- the processing device can be moved with respect to the guiding surface and
- the guiding surface can be moved together with the processing device with respect to the conveying device.

In one embodiment the harvester comprises a further processing device actuator. In particular in the case that the processing device is positioned below the feeding channel this further processing device actuator can move the processing device with respect to the conveying device from the central remote position into the processing position or vice versa.

In one implementation the force of gravity tends to move the processing device into the central remote position. The further processing device actuator can move the processing device upwards against the force of gravity and against the expanding force of compressed crop material in the feeding channel. It is also possible that the further processing device actuator can additionally move the processing device from the processing position into the central remote position.

In the case that the processing device is positioned above the feeding channel it is possible that the further processing device actuator can move the processing device against the force of gravity from the processing position into the central remote position and/or against the expanding force of compressed crop material into the processing position.

In one implementation the harvester inhibits the further processing device actuator from moving the processing device into the processing position if the or one assigned cover position sensor has detected that the or one cover is in the access-enabling position. This implementation even better protects a living being. In a further implementation the further processing device actuator can move the processing device regardless of the cover position.

In one embodiment the processing device actuator can selectively move the processing device into the lateral remote position and into a further lateral remote position by moving it into one selected of two opposite directions, e.g. selectively to the left and to the right with respect to the conveying direction caused by the conveying device.

In one implementation the feeding channel and/or the chamber is positioned between the cover and a further cover. The further cover can be moved between a further covering position and a further access-enabling position. The processing device can selectively be moved towards the cover into the lateral remote position and towards the further cover into the further lateral remote position. A cover position sensor measures if the cover is in the covering or in the access-enabling position. A further cover position sensor measures if the further cover is in the further covering position or in the further access-enabling position. The processing device can only be moved towards the cover into the lateral remote position if the cover is in the access-enabling position - preferably regardless of the position of the further cover. The processing device can only be moved towards the further cover if the further cover is in the further access-enabling position - preferably regardless of the position of the cover. It is therefore possible that the processing device can currently be moved into the further lateral position but not into the lateral remote position as the further cover is in the further access-enabling position but the cover is in the covering position.

In one embodiment the harvester comprises a further processing device which can be moved between a processing position, a center remote position, and at least one further lateral remote position. The further processing device being in the processing position also cooperates with the conveying device for processing conveyed crop material. Preferably the further processing device can be moved independently from the processing device. In one implementation the processing device actuator - or a further processing device actuator - can move the further processing device in a further lateral moving direction towards the or one cover into the further lateral remote position. The further lateral moving direction is preferably perpendicular to the lateral moving direction.

It is possible that the further processing device is entirely positioned beside the processing device when every processing device is in the processing position or in the central remote position. It is also possible that the two processing devices being in the processing position provide a sequence of processing elements, e.g. a sequence of knives, wherein the processing elements arranged in the sequence alternatively belong to the one or to the other processing device.

In one embodiment the or one cover can be locked in the covering position by a locking device. The cover must be kept in the covering position as long as at least one designated part of the harvester rotates or otherwise moves. This rotatable part can be a shaft, a roller, a sprocket wheel, or a chain e.g. Otherwise a human operator might be injured by this designated part.

In this embodiment a rotating part sensor checks whether or not this designated part is actually rotating or otherwise moving. The locking device for the cover can only be transferred into a releasing mode if the rotating part sensor has checked that the designated part does currently not rotate or otherwise move. Otherwise the locking device is kept in the locking mode and locks the cover in the covering position. The rotating part sensor can measure a value indicative of the rotating velocity or the torque consumption of the part or the electric consumption, e.g.

Preferably an alert is generated if the rotating part sensor detects that the part rotates and if the cover position sensor detects that the or one cover is in the access-enabling position.

In a further embodiment the movement of the processing device into the or one lateral remote position is inhibited if the rotating part sensor detects a rotating part.

The chamber can entirely be surrounded by the wall or by several walls or by several chamber processing elements - with the exception of a crop material inlet and optionally a wrapping material inlet. The chamber can have the shape of a drum or of an ellipsoid or of a channel. The chamber can also have a cuboid shape with a bottom and four sidewalls and optionally a roof. Or the top side of the chamber is open.

In one application the injected loose material is processed in the chamber, e.g. is pressed or threshed or cleaned or is separated into large and small pieces. At least one chamber processing device touches the loose material in the chamber. The chamber processing device - or a supporting device for the chamber processing device - is mounted at the or one side wall of the chamber. One part of the chamber processing device or of the supporting device protrudes out of the side wall. An access to this protruding part is possible if the cover adjacent to this wall is in the access-enabling position. Examples are a pressing belt (chamber processing device) guided over a driven roller (supporting device) or a pressing or threshing or cutting roller (chamber processing device). The protruding part of the roller is driven, e.g. by a chain or a shaft.

In a further application the injected loose material is stored in the chamber and is conveyed within the chamber, e.g. by means of a bottom conveyor guided over at least one driven roller. A driven part of the driven roller protrudes beyond the chamber side wall.

The invention can be used in an agricultural vehicle which drives or which is pulled over ground, e.g. on board of a self-propelled or pulled round baler, a cuboid baler, a field chopper, a combined harvester, or a loader wagon. The invention can also be used on board of a stationary plant, e.g. for processing recycling material or cartridges or waste.

These and other aspects of the invention and of the preferred embodiment will be even more apparent from the detailed embodiment as described below and will be elucidated in detail there.

### BRIEF DESCRIPTION OF THE DRAWINGS

- Fig. 1: shows in a side view the feeding channel of the first embodiment with both guiding surface parts and the cutting assembly being in the cutting position;
- Fig. 2: shows the feeding channel of Fig. 1 in a top view with both guiding surface parts being in the operating position and the cutting assembly being in the cutting position;
- Fig. 3: shows in the side view of Fig. 1 the feeding channel of the first embodiment with the cutting area guiding surface part being in the lateral non-operating position and the cutting assembly being in the lateral remote position;
- Fig. 4: shows in the top view of Fig. 2 the feeding channel being in the situation of Fig. 3;
- Fig. 5: shows in the side view of Fig. 1 the feeding channel of the second embodiment with the cutting assembly being in the cutting position;
- Fig. 6: shows in the top view of Fig. 2 the feeding channel of Fig. 5;
- Fig. 7: shows in a rear view a round baler with a cover plate in the covering position;
- Fig. 8: shows in the viewing direction of Fig. 7 the baler with the cover plate in the access-enabling position;
- Fig. 9: shows in a perspective view two cover plates with the left cover plate in the covering position and the right cover plate in the access-enabling position;
- Fig. 10: shows the cover plates of Fig. 9 both being in the access-enabling position;
- Fig. 11: shows schematically by means of a flow diagram how the cutting assembly is moved from the processing position into the left lateral remote position.

### DETAILED DESCRIPTION OF EMBODIMENT

In all embodiments described below the invention is used on board of a bale forming apparatus (baler) with a cutting assembly. Such a baler moves or is pulled over ground in a travelling direction TD, picks up loose crop material from the ground or receives in a further way loose crop material, conveys the picked-up crop material through a feeding channel towards a pressing chamber or pressing channel, cuts the conveyed crop material in the feeding channel, injects the cut crop material into the pressing chamber or channel, and forms from the injected crop material round-cylindrical or cuboid bales in the drum-shaped pressing chamber or rectangular pressing channel. The invention can also be used on board of further harvesters with a cutting assembly, i.e. on board of a loader wagon which picks up crop material from the ground and conveys it into a storing room.

In the case of a round baler the drum-shaped pressing chamber is surrounded by several pressing rollers and/or pressing belts and by two side walls. In the case of a cuboid baler the pressing channel is surrounded by four sidewalls and a piston oscillating in a front segment of the pressing channel.

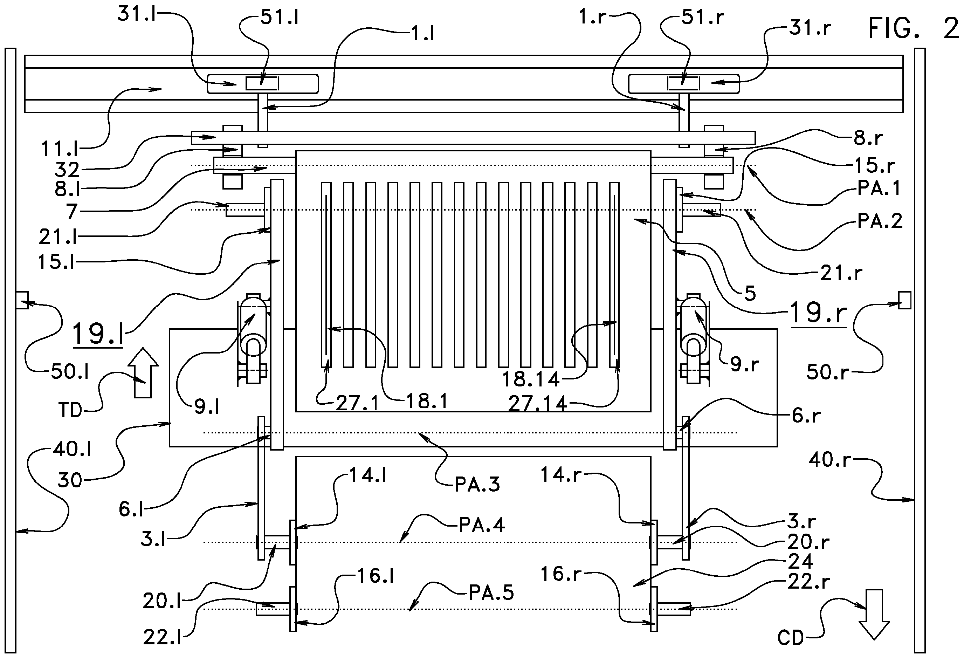

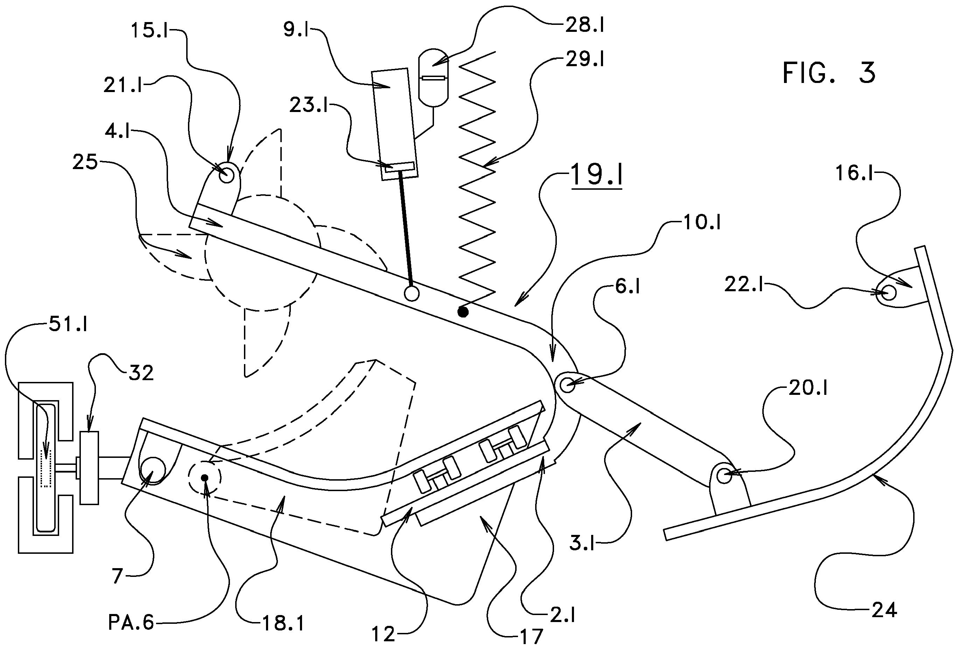

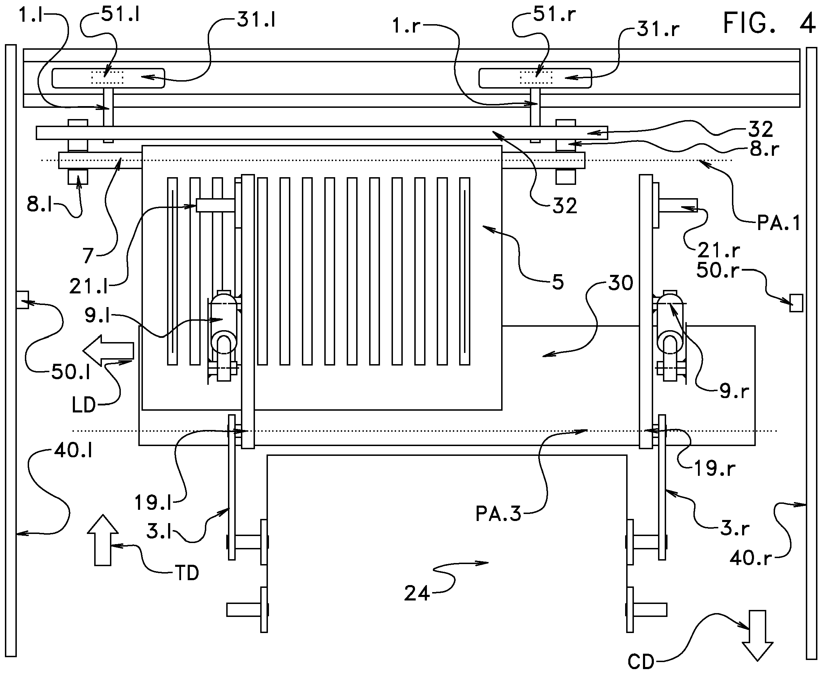

Fig. 1 to Fig. 4 show a first embodiment of the invention. Fig. 1 and Fig. 3 show the invention in a side view from the left, Fig. 2 and Fig. 4 in a top view. The terms "left" and "right" refer to the travelling direction TD. This first and a second embodiment (described below) can be used for round and cuboid balers as well as for loader wagons.

A conveying rotor 25 comprises several conveying stars each with several rigid tines wherein the conveying stars are arranged in a sequence being perpendicular to the drawing planes of Fig. 1 and Fig. 3. The conveying stars are omitted in Fig. 2 and Fig. 4. The conveying rotor 25 is rotated (in Fig. 1 and Fig. 3 anti-clockwise). The rotated conveying rotor 25 conveys the picked-up or otherwise received crop material through a feeding channel 53 and in the conveying direction CD opposite to the travelling direction TD towards the pressing or storing chamber.

In the side views of Fig. 1, Fig. 3, and Fig. 5 the travelling direction TD is from right to left and the opposite conveying direction CD from left to right.

In the embodiment the conveying rotor 25 operates in an undershot manner, i.e. the crop material is conveyed below the conveying rotor 25. The feeding channel 53 is formed between the conveying rotor 25 and a guiding surface positioned below the feeding channel 53 and serving as the channel bottom.

In the first and second embodiments the guiding surface below the feeding channel 53 has two consecutive parts:
- a cutting area guiding surface part 5 and
- a subsequent guiding surface part 24.

The crop material is first conveyed over the cutting area guiding surface part 5 and subsequently over the subsequent guiding surface part 24. The invention can also be implemented on board of a harvester with a one-parted guiding surface or a guiding surface with two parts wherein one guiding surface part is beside the other guiding surface part - seen in the conveying direction CD.

In one implementation a stuffing device (not shown) is positioned above the subsequent guiding surface part 24 and pre-presses the crop material. The stuffing device can comprise several parallel stuffing tines and performs several stuffing strokes and subsequently a loading stroke. The stuffing strokes compress the crop material while the feeding channel outlet is closed. The loading stroke shifts the compressed crop material through the opened feeding channel outlet into the chamber.

It is also possible that a conveyor belt stuffs crop material being positioned above the subsequent part 24. It is also possible that crop material is only pre-pressed in the feeding channel 53 by the conveying rotor 25.

The harvester cuts the picked-up or otherwise received crop material while the crop material is conveyed through the feeding channel 53. The crop material is cut by a sequence of approximately triangular knives 18.1, ..., 18.14 engaging from below into the feeding channel 53. Several longitudinal slots 27.1, ..., 27.14 are cut into the cutting area guiding surface part 5 and cooperating with the conveying rotor 25. In the situation shown in Fig. 1 the knives 18.1, ..., 18.14 are in the cutting position and therefore engage through these longitudinal slots 27.1, ..., 27.14 into the feeding channel 53 and into gaps between conveying stars. While the knives 18.1, 18.2, ... are in the cutting position, they are stationary. The conveying rotor 25 presses crop material through gaps between adjacent knives 18.1, 18.2, ... thereby the crop material is cut.

The knives 18.1, 18.2, ... are pivotally mounted at a knife holder 17 and can pivot with respect to the knife holder 17 around the pivoting axis PA.6. The knife holder 17 can be an axle or a frame and is mounted at the lower surface of the cutting area guiding surface part 5. A knife actuator (not shown) can pivot the knives 18.1, 18.2, ... around the pivoting axis PA.6. The knives 18.1, 18.2, ... and the knife holder 17 belong to a cutting assembly serving as the processing device of the embodiment.

In one implementation the knife actuator rotates a shaft (not shown). Every knife is connected with this shaft by means of a lever. The lever transfers the shaft rotation onto the knives 18.1, 18.2, ... In addition a stationary carrying axle belonging to the knife holder 17 extends along the pivoting axis PA.6 and holds the knives 18.1, 18.2, ... in a front area.

In the embodiment of Fig. 1 to Fig. 4 all knives 18.1, 18.2, ... can only be pivoted simultaneously and together. It is also possible that the cutting assembly comprises two knife groups. In one implementation a knife of one knife group is positioned between two knives of the other knife group, i.e. the first knife group comprises the knives 18.1, 18.3, 18.5, ... and the second knife group the other knives 18.2, 18.4, 18.6, ... In a further implementation the cutting assembly comprises a left knife group and a right knife group, i.e. the left knife group comprises the knives 18.1, 18.2, ... 18.7 and the right knife group the other knives 18.8, 18.9, ... 18.14. In both implementations the knives of one knife group can be pivoted independently from the knives of the other knife group. It is possible that the knives of no knife group, of exactly one knife group or of both knife groups are in the cutting position and engage from below into the feeding channel 53.

The cutting area guiding surface part 5 is pivotally connected with the harvester's frame 35 by means of a traversal cross-bearing unit 7 (to be described below) which extends perpendicular to the drawing plane of Fig. 1 and Fig. 3 and is in the drawing plane of Fig. 2 and Fig. 4.

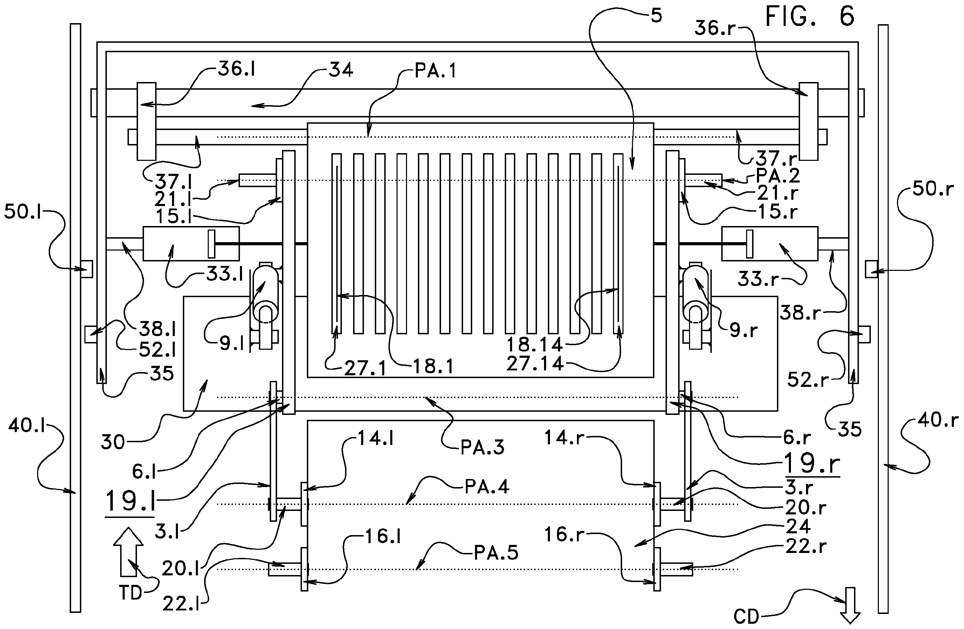

The cutting area guiding surface part 5 together with the cutting assembly 17, 18.1, 18.2, ... can pivot with respect to the conveying rotor 25around a horizontal pivoting axis PA.1 perpendicular to the travelling direction TD, cf. Fig. 2 and Fig. 6. This pivoting axis PA.1 is defined by the traversal cross bearing unit 7, cf. Fig. 2. Pivoting the cutting area guiding surface part 5 around the pivoting axis PA.1 causes the cutting assembly 17, 18.1, 18.2, ... being moved from the cutting position into the central remote position or back.

The subsequent guiding surface part 24 is pivotally connected with the harvester's frame 35 by means of
- a second left frame-mounted pin 22.1 and a second left frame-connected holder 16.1 and
- a corresponding second right frame-mounted pin 22.r and a second right frame-connected holder 16.r.

The subsequent guiding surface part 24 can pivot with respect to the frame 35 around a horizontal pivoting axis PA.5 which is defined by the two second frame-mounted pins 22.1, 22.r, cf. Fig. 2 and Fig. 6. The subsequent guiding surface part 24 can further pivot around a pivoting axis PA.4 which is defined by the second pins 20.1, 20.r of the connecting assembly which is described below.

The two guiding surface parts 5, 24 are pivotally connected with each other by means of a connecting assembly as described in WO 2014129892 A1. This connecting assembly comprises
- a left bracket 3.1 and a right bracket 3.r,
- a left J-shaped longitudinal bearing unit 19.1,
- a corresponding right J-shaped longitudinal bearing unit 19.r,
- a first left pin 6.1 connecting the left bracket 3.1 with the left bearing unit 19.1,
- a corresponding first right pin 6.r connecting the right bracket 3.r with the right bearing unit 19.r,
- a second left holder 14.1 and a second left pin 20.1 connecting the subsequent guiding surface part 24 with the left bracket 3.1, and
- a corresponding second right holder 14.r and a second right pin 20.r connecting the subsequent guiding surface part 24 with the right bracket 3.r.

The left J-shaped longitudinal bearing unit 19.1 comprises
- a left upper arm 4.1,
- a left lower arm 2.1, and
- a left connecting stub 10.1 which rigidly connects the two left arms 4.1, 2.1.

The corresponding right J-shaped longitudinal bearing unit 19.r comprises
- a right upper arm 4.r,
- a right lower arm 2.r, and
- a right connecting stub 10.r which rigidly connects the two right arms 4.r, 2.r.

The connecting assembly is pivotally connected with the harvester's frame 35 by means of
- a first left frame-mounted pin 21.1 and a first left frame-connected holder 15.1 mounted at the front end of the left upper arm 4.1,
- a first right frame-mounted pin 21.r and a first right frame-connected holder 15.r mounted at the front end of the right upper arm 4.r, and
- two vertical piston-cylinder devices 9.1, 9.r.

The left vertical piston-cylinder device 9.1 comprises a left piston 23.1 and the corresponding right vertical piston-cylinder device 9.r comprises a right piston 23.r. The upper ends of the piston-cylinder devices 9.1, 9.r are mounted at the harvester's frame 35. A left accumulator 28.1 is connected with the rod-side chamber of the left piston-cylinder device 9.1. A corresponding right accumulator 28.r (not shown) is connected with the rod-side chamber of the right piston-cylinder device 9.r.

In one implementation the piston-cylinder devices 9.1, 9.r are double-acting devices and can lift up and raise down the connecting assembly with the bearing units 19.1, 19.r and the brackets 3.1, 3.r. Thereby both guiding surface parts 5, 24 and the cutting assembly 17, 18.1, 18.2, ... are lifted up and raised down in a controlled manner. By lifting and lowering the connecting assembly the cross section of the feeding channel 53 is enlarged. The knives 18.1, 18.2, ... remain penetrating the slots 27.1, 27.2, ...

In an alternative implementation the piston-cylinder devices 9.1, 9.r operates only in one direction and tends to lift the connecting assembly towards the conveying rotor 25 against the force of gravity and against the expanding force of the crop material in the feeding channel 53. The expanding force of the crop material in the feeding channel 53 and the force of gravity tends to lower down the guiding surface 5, 24 and thereby the connecting assembly against the force of the piston-cylinder devices 9.1, 9.r. The connecting assembly can only be lowered downwards when the piston-cylinder devices 9.1, 9.r are released and enable this movement or if the expanding force surpasses the retaining force applied by the piston-cylinder devices 9.1, 9.r.

Fig. 1 shows schematically the guiding surface 5, 24 in the standard operating position with the cutting assembly 17, 18.1, 18.2, ... in the cutting position in which the knives 18.1, ... engage from below into the feeding channel 53 and through gaps between adjacent conveying stars of the conveying rotor 25. The piston-cylinder devices 9.1, 9.r are in a retracted mode. Fig. 3 shows the guiding surface 5, 24 with the cutting assembly being in a lowered non-operating position. The vertical piston-cylinder devices 9.1, 9.r are extracted. Compared with the situation shown in Fig.1 the distance between the guiding surface 5, 24 and the conveying device 25 is enlarged. The knives 18.1, 18.2, ... do no longer engage into the gaps between adjacent rigid conveying tines but still penetrate the slots 27.1, 27.2, .... The cutting assembly of the embodiment is now in the central remote position. In this central remote position the cutting assembly 17, 18.1, 18.2, ... does no longer cooperate with the conveying device 25. Thanks to the enlarged cross section a jam in the feeding channel 53 can be removed.

In the situation shown in Fig. 3 the knives 18.1, 18.2, ... still penetrate the slots 27.1, 27.2, ... in the surface part 5 and have kept their position relative to the guiding surface 5, 24. It is possible that the knife actuator pivots or otherwise moves the knives 18.1, 18.2, ... with respect to the guiding surface 5, 24 away from the conveying device 25 such that the knives 18.1, 18.2, ... do no longer engage through the slots 27.1, 27.2, After this movement (not shown) the knives 18.1, 18.2, ... are positioned below the slots 27.1, 27.2, ...

In one implementation the cutting assembly 17, 18.1, 18.2, ... can be shifted laterally with respect to the guiding surface 5, 24. This is only possible if the knives 18.1, 18.2, ... do not penetrate the slots 27.1, 27.2, ... The first and second embodiments, however, makes it possible to shift the cutting assembly while the knives 18.1, 18.2, ... still penetrate the slots 27.1, 27.2, ... The risk is reduced that a knife 18.1, 18.2, ... does not meet the corresponding slot 27.1, 27.2, ... but hits the guiding surface part 5 when being pivoted back into the cutting position.

As soon as the knives 18.1, 18.2, ... do no longer engage into the gaps between the rigid tines of the conveying rotor 25, the entire cutting area guiding surface part 5 including the cutting assembly 17, 18.1, ... can be shifted with respect to the conveying rotor 25 in a horizontal direction perpendicular to the travelling direction TD into at least one lateral remote position. In the embodiment the cutting area guiding surface part 5 can be shifted selectively to the left or to the right, i.e. into a left lateral position or into a right lateral position. Fig. 4 shows a lineal lateral moving direction LD pointing to the left.

In the first and second embodiments the knives 18.1, 18.2, ... can only be pivoted and shifted together and simultaneously. As mentioned above it is also possible that the cutting assembly comprises two knife groups and one knife group can be shifted into a lateral remote position whereas the other knife group remains in the central remote position or even in the cutting position.

In one implementation the cutting area guiding surface part 5 comprises two guiding surface segments positioned beside each other, i.e. a left and right segment. One knife group is mounted at the left guiding surface segment and the other knife group at the right segment. The left guiding surface segment together with one knife group can be shifted into a left lateral remote position independently from the other guiding surface segment. The right guiding surface segment together with the other knife group can be shifted into right lateral remote position.

As mentioned above, the piston-cylinder devices 9.1, 9.r can move - or can enable a movement - of the cutting area guiding surface part 5 downwards. This movement causes the cutting area guiding surface part 5 together with the cutting assembly 17, 18.1, 18.2, ... to be pivoted downwards. The cutting area guiding surface part 5 can be in the lifted operating position of Fig. 1 or in the lowered position of Fig. 3. Thereby the cutting assembly can be moved together with the guiding surface part 5 from the cutting position into the central remote position and backwards.

In one implementation a knife actuator (not shown) can pivot the knives 18.1, 18.2, ... around the pivoting axis PA.6 with respect to the knife holder 17 and thereby with respect to the cutting area guiding surface part 5 from a slot penetrating position into a now-penetrating position. In one implementation the knife actuator is single-acting and pivots the knives 18.1, 18.2, ... upwards against the expanding force of the crop material. The knife actuator can be released and the force of gravity pivots the knives 18.1, 18.2, ... downwards such that they do no longer penetrate the slots 27.1, 27.2, ... It is also possible that the knife actuator is a double-actuating device. In one implementation the knife actuator rotates a shaft and the shaft rotates via the respective assigned lever the knives 18.1, 18.2, ... It is therefore possible that the cutting assembly takes two different central remote positions: In an upper central remote position the knives still penetrate the slots of the lowered guiding surface 5, 24 and in a lower central remote position the knives do no longer penetrate.

In the first and second embodiments the cutting assembly 17, 18.1, 18.2, ... can be shifted together with the cutting area guiding surface part 5 between the or one central remote position selectively into a left or a right lateral remote position. The first embodiment of Fig. 1 to Fig. 4 shows one implementation of a drive that can shift the cutting area guiding surface part 5 together with the cutting assembly 17, 18.1, 18.2, ... in a horizontal direction LD to the left and perpendicular to the travelling direction TD and perpendicular to the conveying direction CD. The same drive can shift the cutting area guiding surface part 5 to the right, i.e. in the opposite direction. The cutting area guiding surface part 5 can only be shifted after the knives 18.1, 18.2, ... are pivoted into the or one central remote position and do no longer engage into the gaps between adjacent rigid conveying stars of the conveying rotor 25.

A traversal cross bearing unit 7 carries the cutting area guiding surface part 5. The cross bearing unit 7 is guided through two apertures in the two holders 13.1 and 13.r which are rigidly mounted near the front edge of the cutting area guiding surface part 5 and below the cutting area guiding surface part 5. The traversal cross bearing unit 7 can be shifted together with the cutting area guiding surface part 5.

By means of two cross bearing holders 8.1, 8.r this movable traversal cross bearing unit 7 is connected with a traversal wheels holding bearing 32. The cross bearing holders 8.1, 8.r and the bearing 32 are also shifted together with the cutting area guiding surface part 5. The traversal wheel holding bearing 32 carries a left axle 1.l and a right axle 1.r wherein every axle 1.1, 1.r has a respective lateral offset to the center point of the bearing 32 and extend parallel to the travelling direction TD. On the left axle 1.l a left wheel 31.l is rotatably mounted. On the right axle 1.r a right wheel 31.r is rotatably mounted. These two wheels 31.1, 31.r can rotate around their own rotational axes (the axles 1.1, 1.r). The two wheels 31.1, 31.r are supported from below by a lower guide rail 11.l and from above by an upper guide rail 11.u. These guide rails 11.1, 11.u are rigidly mounted at the harvester's frame 35. They extend perpendicular to the travelling direction TD and perpendicular to the drawing planes of Fig. 1 and Fig. 3 and are in the drawing planes of Fig. 2 and Fig. 4. The two wheels 31.1, 31.r roll over the lower guide rail 11.1.

In one implementation the wheels 31.1, 31.r can be sprocket wheels engaging into corresponding teeth in the lower guide rail 11.l and/or in the upper guide rail 11.u. It is also possible that an endless chain (not shown) rotates chain wheels (also not shown) on the axles 1.1, 1.r and the rotated axles 1.1, 1.r rotate the wheels 51.1, 51.r. It is also possible that the wheels (31.1, 31.r) have smooth circumferential surfaces.

Alternative implementations of the first embodiment are also possible. These alternative implementations can also shift the entire cutting area guiding surface part 5 together with the cutting assembly 17, 18.1, 18.2, ... laterally to the left or to the right. In one alternative implementation an electric drive can shift the cutting area guiding surface part 5. A left electric motor 51.1 is arranged in the interior of the left driven wheel 31.1 and can rotate the left wheel 31.1 around the left axle 1.1. A corresponding right electric motor 51.r is arranged in the interior of the right wheel 31.r and can rotate the right wheel 31.r around the right axle 1.r. These two motors 51.1, 51.r are schematically shown in Fig. 1 to Fig. 4. As the cutting assembly 17, 18.1, 18.2, ... is shifted together with the guiding surface part 5, the electric motors 51.1, 51.r belong to the cutting assembly actuators of the first embodiment.

For enabling this lateral shift the rear part of the cutting area guiding surface part 5 can roll over a traversal bearing and gliding unit 30 which provides a smooth upper gliding surface 12. Two roller arrangements 26.1, 26.2 can roll over this smooth upper gliding surface 12 in a direction perpendicular to the drawing planes of Fig. 1 and Fig. 3. The traversal bearing and gliding unit 30 is rigidly connected with and supported by the two lower arms 2.1, 2.r of the longitudinal bearing units 19.1, 19.r.

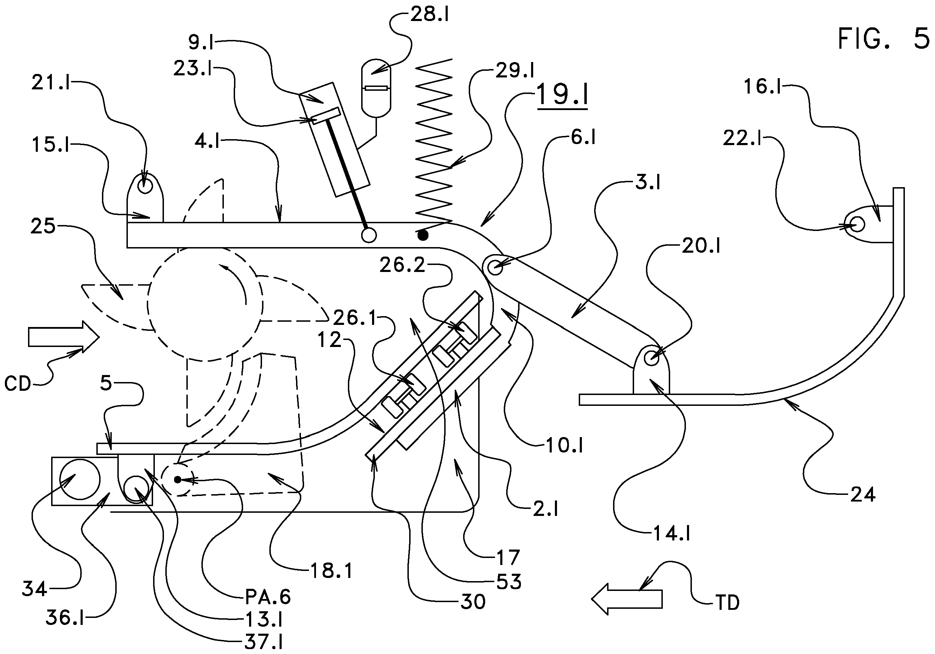

Fig. 5 and Fig. 6 show a second embodiment how the cutting area guiding surface part 5 can automatically be shifted laterally to the left or to the right by means of two horizontal piston-cylinder devices 33.1, 33.r. A rigid traversal bearing 34 is mounted at the baler's frame 35 and extends perpendicular to the travelling direction TD and to the conveying direction CD. This traversal bearing 34 carries a left bracket 36.1 and a right bracket 36.r. The left bracket 36.1 carries a left pin 37.1. The right bracket 36.r carries a right pin 37.r. These two pins 37.1, 37.r carry and support the cutting area guiding surface part 5 from below in a front part via the two holders 13.1, 13.r. The rear part of the cutting area guiding surface part 5 is carried by the traversal bearing and gliding unit 30 in the same way as in the first embodiment as shown in Fig. 1 to Fig. 4. Therefore the cutting area guiding surface part 5 can pivot around the two pins 37.1, 37.r and can additionally be shifted along the pins 37.1, 37.r.

A left horizontal piston-cylinder device 33.1 is connected with the left edge of the cutting area guiding surface part 5 and with the harvester's frame 35 by means of a left cantilever element 38.1. A corresponding right horizontal piston-cylinder device 33.r is connected with the frame 35 by means of a right cantilever element 38.r, cf. Fig. 6. These two horizontal piston-cylinder devices 33.1, 33.r cooperate and can shift the cutting area guiding surface part 5 selectively to the left or to the right. As the cutting assembly 17, 18.1, 18.2, ... is shifted together with the guiding surface part 5, the piston-cylinder devices 33.1, 33.r belong to the cutting assembly actuators of the second embodiment.

In every implementation of the cutting assembly actuator the feeding channel 53 of the embodiment is positioned between two lateral cover plates, namely between a left cover plate 40.1 and a right cover plate 40.r. In the side views of Fig. 1 and Fig. 3 and Fig. 5 these cover plates are omitted. Fig. 2, Fig. 4, and Fig. 6 show schematically the two cover plates 40.1, 40.r. Every cover plate 50.1, 50.r can extend in a plane or can have a curved or arcuate shape.

Every cover plate 40.1, 40.r can be pivoted independently from the other cover plate 40.1, 40.r between a covering position and an access-enabling position which is described in detail below. A left cover position sensor can monitor the current position of the left cover 40.1 and a right cover position sensor can monitor the current position of the right cover 40.r. In one implementation of the cover position sensors a left movable sensor element 50.1 is mounted at the left cover plate 40.1. A corresponding right movable sensor element 50.r is mounted at the right cover plate 40.r.

In addition Fig. 4 and Fig. 6 shows
- the left movable sensor element 50.1 at the left cover plate 40.1,
- the right movable sensor element 50.r at the right cover plate 40.r,
- a left element detecting unit 52.1 at the left sidewall of the frame 35, and
- a right element detecting unit 52.r at the right sidewall of the frame 35.

These elements will be described below in detail.

The human operator must not perform maintenance work if a part of the baler is still rotating. Therefore a plurality of torque sensors and/or tachometers or other movement sensors (not shown) can check if any rotatable part of the baler is still rotating. In particular every shaft and every roller and every chain is monitored. In the embodiment the cover plates 40.1, 40.r should be in the covering position and the lateral shift of the cutting assembly 17, 18.1, 18.2, ... is inhibited if a currently rotating part is discovered.

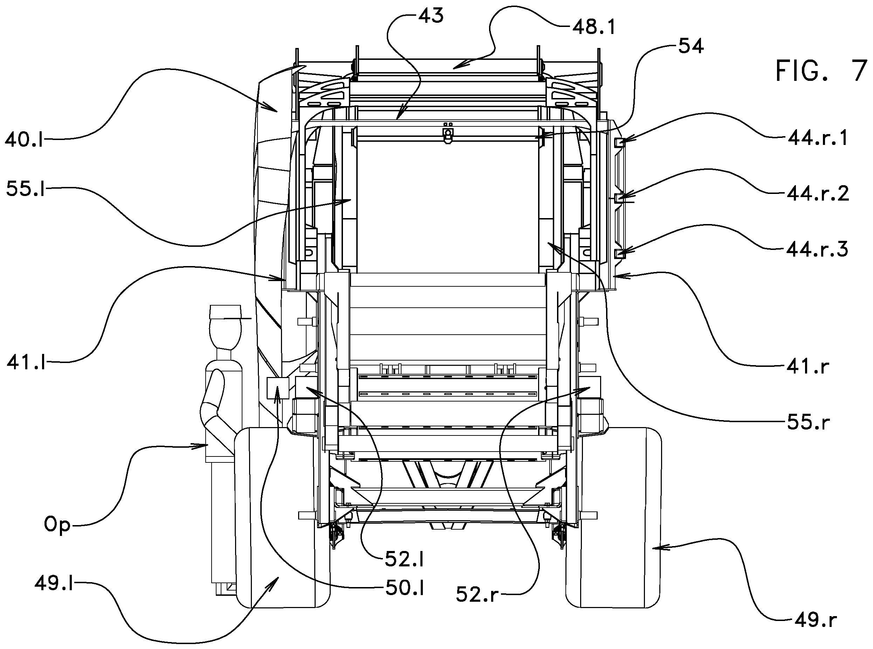

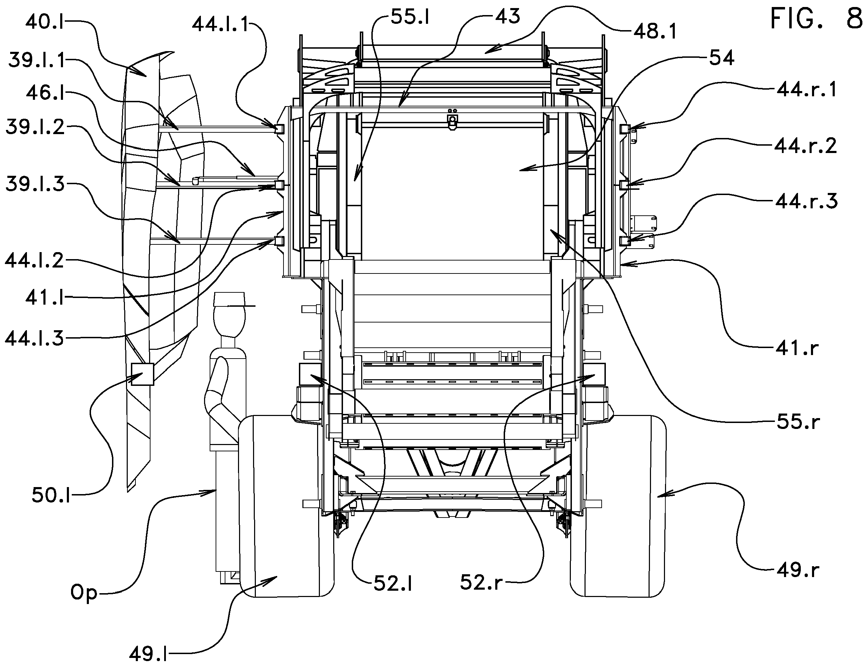

Fig. 7 and Fig. 8 show in a rear view a round baler with two pivotal lateral cover plates 40.1, 40.r, i.e. the travelling direction TD points away from the observer. For sake of clarity the right cover plate 40.r is not shown. In Fig. 7 the left cover plate 40.1 is in the covering position and in Fig. 8 in the access-enabling position. When the left cover 40.1 is in the access-enabling position, an operator Op can enter the space between the left cover plate 40.1 and the left sidewall of the round baler and has access to the left sidewall, cf. Fig. 8.

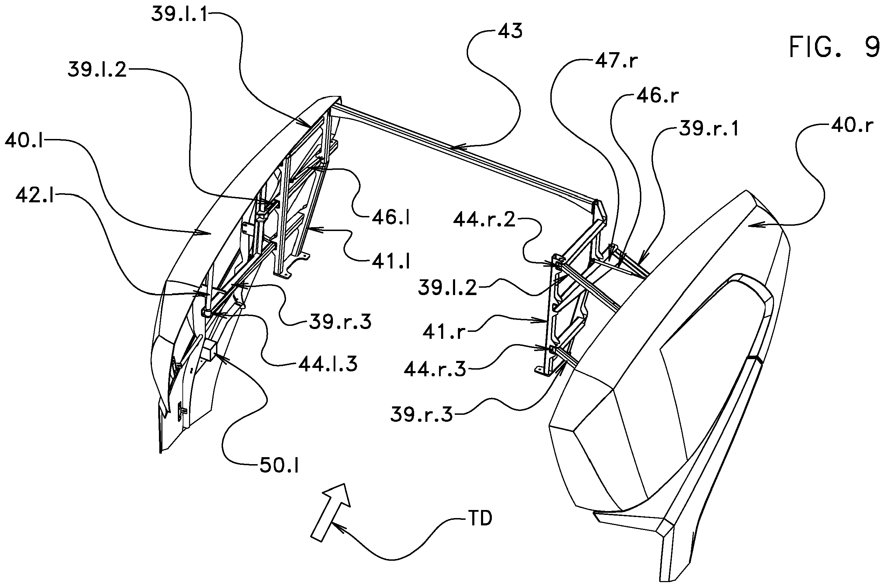

In the embodiment of Fig. 7 and Fig. 8 every cover plate 40.1, 40.r can be moved from the covering position into the access-enabling position by a pivotal movement along an upwardly curved trajectory and back along the opposite trajectory. The left cover plate 40.1 is carried by a left parallelogram guider comprising three left bearing units 39.1.1, 39.1.2, 39.1.3. These three left bearing units 39.1.1, 39.1.2, 39.1.3 are on the one hand connected with a left chamber-side holding frame 41.l and on the other hand with a left cover-side holding frame 42.1 (Fig. 9). The left chamber-side holding frame 41.1 is mounted at the left chamber sidewall 55.1 of the round baler. The left parallelogram guider guides the left cover 40.1 from the covering position into the access-enabling position and back along two opposite curved trajectories.

Fig. 8 shows the three chamber-side connecting points 44.l.1, 44.1.2, 44.1.3 for the left bearing units 39.1.1, 39.1.2, 39.1.3. The right cover plate 40.r is connected with the right sidewall 55.r of the round baler in a corresponding way by means of three right bearing units 39.r.1, 39.r.2, 39.r.3. The three right bearing units 39.r1, 39.r.2, 39.r.3 are connected with a right chamber-side holding frame 41.r and with a right cover-side holding frame 42.r. Fig. 7 and Fig. 8 show three right chamber-side connecting points 44.r.1, 44.r.2, 44.r.3 for the right bearing units 39.r.1, 39.r.2, 39.r.3. The two chamber-side holding frames 41.1, 41.r are connected with each other by means of a cross bearing 43. Fig. 7 and Fig. 8 further show the drum-shaped bale forming chamber 54, the chamber sidewalls 55.1 and 55.r, an exemplary pressing roller or deflecting roller 48.1, a left ground-engaging wheel 49.1, and a right ground-engaging wheel 49.r.

Fig. 8 further shows schematically the left movable sensor element 50.1 mounted at the left cover 40.1 and the left element detecting element 52.1 mounted at the frame 35.

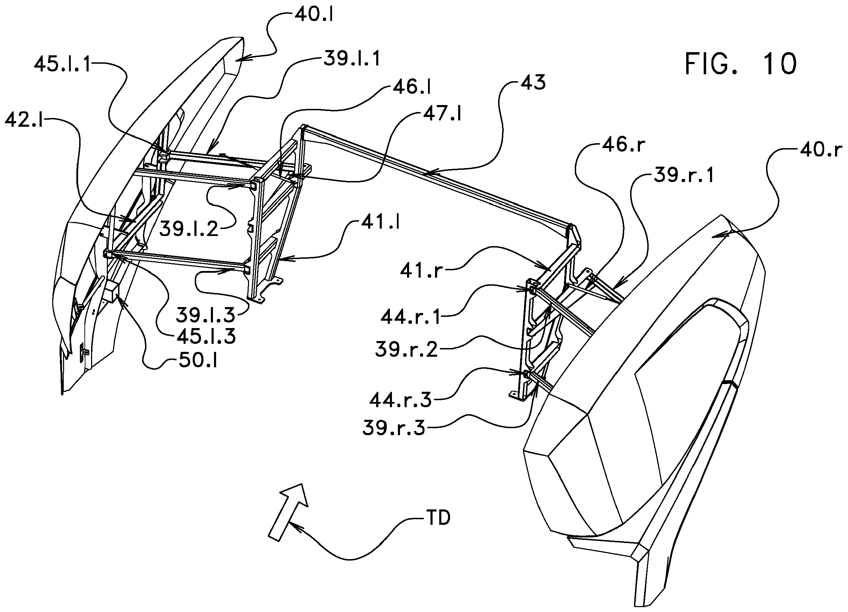

Fig. 9 and Fig. 10 show the two cover plates 40.1, 40.r in a perspective view. Fig. 9 and Fig. 10 further show the cross bearing 43 which mechanically connects the two chamber-side holding frames 41.l, 41.r with each other. In both figures the right cover plate 40.r is in the access-enabling position. The left cover plate 40.1 is in Fig. 9 in the covering position and in Fig. 10 in the access-enabling position. Fig. 9 further shows a right limiting element 47.r which limits the movement of the right cover plate 40.r away from the right chamber sidewall 55.r. Fig. 9 and Fig. 10 further show some chamber-side connecting points 44.1.1, 44.1.2, 44.1.3 for the left bearing units 39.1.1, 39.1.2, 39.1.3 and some cover-side connecting points 45.l.1, 45.1.2, 45.1.3 also for the left bearing units 39.1.1, 39.1.2, 39.1.3 as well as the corresponding connecting points for the right bearing units 39.r.1, 39.r.2, 39.r.3.

In one embodiment a left position keeping unit 46.1 keeps the cover plate 40.1 in the access-enabling position. The right cover plate 40.r is also kept in the access-enabling position by a corresponding right position keeping unit 46.r. Every position keeping unit 46.1, 46.r can be implemented as a purely passive element, e.g. as a tension spring or piston-cylinder device. The position keeping units 46.1, 46.r can also be implemented as active actuators. The cover plate 40.1, 40.r must be closed, i.e. moved into the covering position, against the retaining force of the respective position keeping unit 46.1, 46.r. This feature avoids the undesired event that the cover plate 40.1, 40.r is closed when an operator Op stands between the opened cover plate 40.1, 40.r and the respective chamber sidewall 55.1, 55.r.

Preferably the cover plate 40.1, 40.r can be locked in the covering position. For opening the cover plate 40.1, 40.r the locking device must be released. Releasing the cover plate 40.1, 40.r requires an action from a human operator Op.

The cover plate 40.1, 40.r performs a curved trajectory which is horizontal or sloping upwards or downwards when being moved from the covering position into the access-enabling position or backwards. Preferably a left limiting element 47.1 limits the movement of the left cover plate 40.1 from the covering position into the access-enabling position. A corresponding right limiting element 47.r limits the movement of the right cover plate 40.r from the covering position into the access-enabling position.

Different implementations of the cover position sensors are possible. It is possible that two left cover position sensors and/or two right cover position sensors are mounted on board of the harvester such that the cover position can also be detected if one sensor fails. It is possible that the two left or two right cover position sensors are implemented in different manners.

In one implementation every movable sensor element 50.1, 50.r at a cover plate 40.1, 40.r comprises a metallic element, e.g. a metallic strip mounted at the inner side of the respective cover plate 40.1, 40.r. Every element detecting unit 52.1, 52.r is mounted at a chamber sidewall 55.1, 55.r or a chamber-side holding frame 41.l, 41.r and can detect the presence of a metallic element 50.1, 50.r in the vicinity of this element detecting unit 52.1, 52.r. The metallic element 50.1, 50.r is only in the vicinity of the element-detecting unit 52.1, 52.r if the assigned cover 40.1, 40.r is closed. If the left element detecting unit 52.1 detects the presence of the metallic element 50.1, a close signal is generated. This close signal shows that the left cover plate 40.1 is in the covering position. Otherwise it can be concluded that the left cover plate 40.1 is in the access-enabling position. The same is valid for the right cover plate 40.r.

In a further implementation the left movable sensor element 50.1 and the left element detecting unit 52.1 belong to a left electric circuit. This left circuit is closed and a close signal is generated if the left cover plate 40.1 is in the covering position. The movable sensor element 50.1 at the left cover plate 40.1 is in contact with the left element detecting unit 52.1 at the left chamber sidewall 55.1. If the left cover plate 40.1 is moved towards the access-enabling position, this left circuit is interrupted as a distance between the elements 50.1 and 52.1 occurs. The corresponding feature is implemented for the right cover plate 40.r.

In yet a further implementation the element detecting unit 52.1 at the left chamber sidewall 55.1 comprises a contact switch. The movable sensor element 50.1 at the left cover plate 40.1 comprises a rigid element. If the left cover plate 40.1 is in the covering position, the rigid element 50.1 actuates the contact switch 52.1 and a close signal is generated. Otherwise the contact switch 52.1 is not actuated.

Preferably the control unit inhibits the rotation of rotatable baler parts if no close signal is generated. This implementation provides a fail-safe solution in particular in the case of a sensor malfunction.

A slightly alternative implementation can also be used for a cover plate 40.1, 40.r which is guided by in arrangement as shown in Fig. 9 and Fig. 10. The contact switch 52.1 is mounted at the left chamber-side holding frame 41.1. The movable sensor element 50.1 at the left cover plate 40.1 contacts this contact switch 52.1 at the left chamber-side holding frame 41.l if the left cover plate 40.1 is in the covering position. It is also possible to mount the contact switch 52.1 at the limiting element 47.1. In this case the contact switch 52.1 is actuated if the cover plate 40.1 is in the fully opened (access-enabling) position.

According to the invention the control unit inhibits the event that the actuator 51.l or 33.1 automatically shifts the cutting area guiding surface part 5 with the cutting assembly 17, 18.1, 18.2, ... in the lateral direction (LD) to the left into a lateral remote position as long as the left cover plate 40.1 is in the covering position. The control unit inhibits an automatic shift to the right as long as the right cover plate 40.r is in the covering position.

Preferably every cover position sensor 50.1, 52.1, 50.r, 52.r delivers an open signal being indicative of the event that the respective cover plate 40.1, 40.r is opened and the cutting assembly 17, 18.1, 18.2, ... can be shifted into the lateral remote position only if the cover position sensor positively detects the opened position. The open signal is not generated and the shift of the cutting assembly 17, 18.1, ... is inhibited if no open signal is received. Not receiving an open signal can be caused by an intermediate position of the cover plate 40.1, 40.r or by a sensor malfunction or signal evaluation failure.

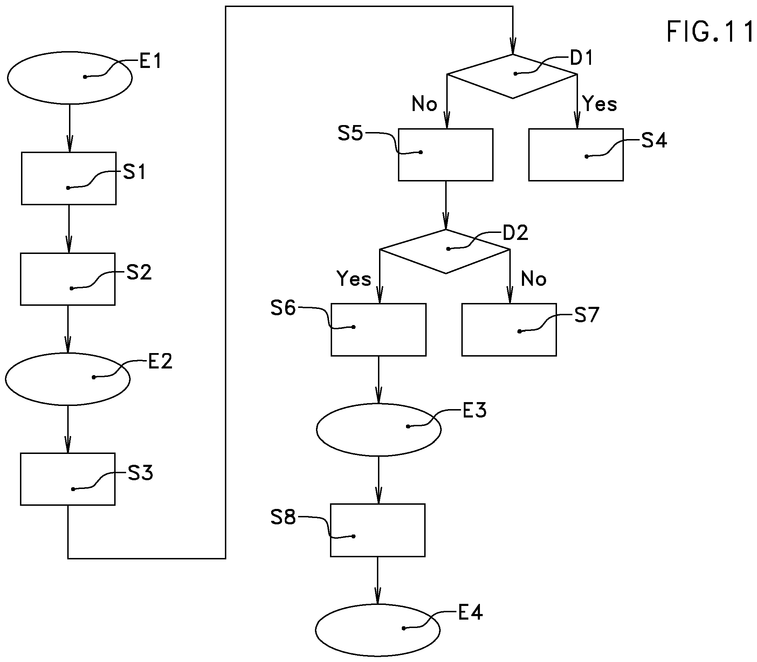

Fig. 11 shows by means of a flow diagram one procedure how to move the cutting assembly into a lateral position. The following table shows the meaning of the decisions (Dx), steps (Sx) and events (Ex) shown in Fig. 11.
- E1: The guiding surface 5, 24 is in the upper (operating) position. The cutting assembly 17, 18.1, ... is in the cutting position and engages through the slots 27.1, 27.2, ... into the feeding channel 53.
- S1: Obtain request from operator. Trigger transfer to maintenance mode: Cutting area guiding surface part 5 together with the cutting assembly 17, 18.1, 18.2, ... is to be moved to the left into the left lateral remote position.
- S2: The vertical piston-cylinder devices 9.1, 9.r extract simultaneously.
- E2: The guiding surface parts 5, 24 together with the cutting assembly are lowered downwards into a central remote position. The knives 18.1, ... do no longer engage into gaps between adjacent rigid tines of the conveying rotor 25 but still engages through the slots 27.1, 27.2, ....
- S3: The rotating part sensors check whether a rotatable harvester part is still rotating.
- D1: Any rotatable part rotating?
- S4: Generate alert "lateral shift not possible - part rotating".
- S5: The left cover position sensor 50.l, 52.l checks the current position of the left cover plate 40.l.
- D2: Is the open signal generated, i.e. is the left cover plate 40.l in the access-enabling position?
- S6: The drives 51.l, 51.r rotate the wheels 1.l, 1.r (first embodiment) or the left horizontal piston-cylinder devices 33.l retracts and the right device 33.r expands (second embodiment) such that the cutting area guiding surface part 5 together with the cutting assembly 17, 18.1, 18.2, ... is moved to the left.
- S7: Generate alert "lateral shift to the left not possible - left cover closed".
- E3: The cutting area guiding surface part 5 together with the cutting assembly 17, 18.1, ... is shifted laterally to the left. The cutting area guiding surface part 5 is in the left lateral position. The cutting assembly 17, 18.1, ... is in the left lateral remote position.
- S8: The knife actuator pivots the cutting assembly 17, 18.1, ... downwards with respect to the cutting area guiding surface part 5.
- E4: The cutting assembly 17, 18.1, ... being in the left lateral remote position is in a maintenance position.

Reference signs used in the claims will not limit the scope of the claimed invention. The term "comprises" does not exclude other elements or steps. The articles "a", "an", and "one" do not exclude a plurality of elements. Features specified in several depending claims may be combined in an advantageous manner.

**LIST OF REFERENCE SIGNS**

| | |
|---|---|
| 1.l | axle of left driven wheel 31.l |
| 1.r | axle of right driven wheel 31.r |
| 2.l | left lower arm of the left longitudinal bearing unit 19.l |
| 2.r | right lower arm of the right longitudinal bearing unit 19.r |
| 3.l | left bracket of the connecting assembly |
| 3.r | right bracket of the connecting assembly |
| 4.l | left upper arm of the left longitudinal bearing unit 19.l |
| 4.r | right upper arm of the right longitudinal bearing unit 19.r |
| 5 | cutting area guiding surface part, carries the cutting assembly, can be shifted laterally |
| 6.l | first left pin of the connecting assembly, connects the left bracket 3.l with the left connecting stub 10.l |
| 6.r | first right pin of the connecting assembly, connects the right bracket 3.l with the right connecting stub 10.r |
| 7 | traversal cross bearing unit, mounted at the lower surface of the cutting area guiding surface part 5 by means of the holders 13.l, 13.r, pivotal around the axis PA.1, carries both axles 1.l and 1.r |
| 8.l | left cross bearing holder, carries the cross bearing unit 7, carried by the bearing 32 |
| 8.r | right cross bearing holder, carries the cross bearing unit 7, carried by the bearing 32 |
| 9.l | left vertical hydraulic piston-cylinder device for lifting up and lowering down the connecting assembly |
| 9.r | right vertical hydraulic piston-cylinder device for lifting up and lowering down the connecting assembly |
| 10.l | left connecting stub between the left upper arm 4.l and the left lower arm 2.l |
| 10.r | right connecting stub between the right upper arm 4.r and the right lower arm 2.r |
| 11.l | lower guide rail, carries and guides the wheels 31.l, 31.r, rigidly mounted at the harvester frame 35 |
| 11.u | upper guide rail, guides the wheels 31.l, 31.r, rigidly mounted at the harvester frame 35 |
| 12 | gliding surface of the traversal bearing and gliding unit 30 |
| 13.l | left holder of the cutting area guiding surface part 5, is connected with the cross bearing unit 7 |
| 13.r | right holder of the cutting area guiding surface part 5, is connected with the cross bearing unit 7 |
| 14.l | second left holder of the connecting assembly, carries the subsequent guiding surface part 24 |
| 14.r | second right holder of the connecting assembly, carries the subsequent guiding surface part 24 |
| 15.l | first left frame-connected holder, carries the left longitudinal bearing unit 19.l at the left upper arm 4.l |
| 15.r | first right frame-connected holder, carries the right longitudinal bearing unit 19.r at the right upper arm 4.r |
| 16.l | second left frame-connected holder, carries the subsequent guiding surface part 24 |
| 16.r | second right frame-connected holder, carries the subsequent guiding surface part 24 |
| 17 | knife holder of the cutting assembly, carries the knives 18.1, 18.2, ..., mounted below the guiding surface part 5 |
| 18.l, ... | knives of the cutting assembly, penetrate the longitudinal slots 27.1, ... |
| 19.l | left longitudinal bearing unit, comprises the left upper arm 4.l, the left connecting stub 10.1, and the left lower arm 2.l |
| 19.r | right longitudinal bearing unit, comprises the right upper arm 4.r, the right connecting stub 10.r, and the right lower arm 2.r |
| 20.l | second left pin of connecting assembly, connects the left bracket 3.l with the second left holder 14.l |
| 20.r | second right pin of connecting assembly, connects the right bracket 3.l with the second right holder 14.r |
| 21.l | first left frame-mounted pin, connects the first left frame-connected holder 15.l with the frame 35 |
| 21.r | first right frame-mounted pin, connects the first right frame-connected holder 15.r with the frame 35 |
| 22.l | second left frame-mounted pin, connects the second frame-connected holder 16.l with the frame 35 |
| 22.r | second right frame-mounted pin, connects the second right frame-connected holder 16.r with the frame 35 |
| 23.l | piston of the left vertical piston-cylinder device 9.l |
| 23.r | piston of the right vertical piston-cylinder device 9.r |
| 24 | subsequent guiding surface part |
| 25 | conveying rotor with stiff conveying tines |
| 26.1, 26.2 | roller arrangement for guiding the cutting area guiding surface part 5 over the traversal bearing and gliding unit 30 |
| 27.1, ... | longitudinal slots in the cutting area guiding surface part 5 for the knives 18.1, ... |
| 28.l | left hydraulic accumulator |
| 28.r | right hydraulic accumulator |
| 29.l | left spring, carries the left upper arm 4.l |
| 29.r | right spring, carries the right upper arm 4.r |
| 30 | traversal bearing and gliding unit |
| 31.l | left wheel for guiding the cutting area guiding surface part 5, rotates around the left axle 1.l, driven by the left motor 51.l |
| 31.r | right wheel for guiding the cutting area guiding surface part 5, rotates around the right axle 1.r, driven by the right motor 51.r |
| 32 | traversal wheel holding bearing, is carried by two axles 1.l, 1.r, carries the two cross bearing holders 8.l, 8.r |
| 33.l | left horizontal piston-cylinder device, pulls and pushes the cutting area guiding surface part 5 in a horizontal direction between a central and a left lateral remote position |
| 33.r | right horizontal piston-cylinder device, pulls and pushes the cutting area guiding surface part 5 in a horizontal direction between a central and a right lateral remote position |
| 34 | traversal bearing |
| 35 | frame of the harvester, carries the guiding surface 5, 24 and the cutting assembly 17, 18.1, 18.2, ... |
| 36.l | left bracket in the second embodiment, connected with the traversal bearing 34, carries the left pin 37.l |
| 36.r | right bracket in the second embodiment, connected with the traversal bearing 34, carries the right pin 37.r |
| 37.l | left pin in the second embodiment, connected with the left bracket 36.l |
| 37.r | right pin in the second embodiment, connected with the right bracket 36.r |
| 38.l | left cantilever element; connects the left horizontal cylinder 33.l with the frame 35 |
| 38.r | right cantilever element; connects the right horizontal cylinder 33.r with the frame 35 |
| 39.l.1, 39.l.2, 39.l.3 | bearing units for the left cover plate 40.l |
| 39.r.1, 39.r.2, 39.r.3 | bearing units for the right cover plate 40.r |
| 40.l | left cover plate |
| 40.r | right cover plate |
| 41.l | left chamber-side holding frame, mounted at the left chamber sidewall 55.l |
| 41.r | right chamber-side holding frame, mounted at the right chamber sidewall 55.r |
| 42.l | left cover-side holding frame, mounted at the left cover plate 40.l |
| 42.r | right cover-side holding frame, mounted at the right cover plate 50.r |
| 43 | cross bearing for connecting the two chamber-side holding frames 41.l, 41.r |
| 44.l.1, 44.l.2, 44.l.3 | chamber-side connecting points for the left bearing units 39.l.1, 39.l.2, 39.l.3 |
| 44.r.1, 44.r.2, 44.r.3 | chamber-side connecting points for the right bearing units 39.r.1, 39.r.2, 39.r.3 |
| 45.l.1, 45.l.2, 45.l.3 | cover-side connecting points for the left bearing units 39.l.1, 39.l.2, 39.l.3 |
| 45.r.1, 45.r.2, 45.r.3 | cover-side connecting points for the right bearing units 39.r.1, 39.r.2, 39.r.3 |
| 46.l | left position keeping unit |
| 46.r | right position keeping unit |
| 47.l | limiting element for the left cover plate 40.l |
| 47.r | limiting element for the right cover plate 40.r |
| 48.1 | pressing roller inside the bale forming chamber 54 |
| 49.1 | left ground-engaging wheel of the round baler |
| 49.2 | right ground-engaging wheel of the round baler |
| 50.1 | left movable sensor element at the left cover plate 40.l |
| 50.r | right movable sensor element at the right cover plate 40.r |
| 51.l | left motor for rotating the axle 1.l of the left wheel 31.l |
| 51.r | right motor for rotating the axle 1.r of the right wheel 31.r |
| 52.l | element detecting unit at the left chamber sidewall 55.l |
| 52.r | element detecting unit element at the right chamber sidewall 55.r |
| 53 | feeding channel positioned between the conveying rotor 25 and the guiding surface 5, 24 |
| 54 | bale forming chamber |
| 55.l, 55.r | sidewalls of the bale-forming chamber 54 |
| CD | conveying direction in which the conveying rotor 25 conveys crop material |
| LD | lateral moving direction |
| Op | operator, pushes and pulls the cover plate 40.l, 40.r |
| PA.1 | first pivoting axis, front pivoting axis of the cutting area guiding surface part 5, defined by the bearing unit 7 |
| PA.2 | second pivoting axis, front pivoting axis of the longitudinal bearing 21.l, 21.r |
| PA.3 | third pivoting axis, rear pivoting axis of the longitudinal bearing units 19.1, 19.r and front pivoting axis of the brackets 3.l, 3.r |
| PA.4 | fourth pivoting axis, front pivoting axis of the subsequent area guiding surface part 24 and rear pivoting axis of the brackets 3.l, 3.r |
| PA.5 | fifth pivoting axis, rear pivoting axis of the subsequent area guiding surface part 24 |
| PA.6 | rotating axis around which the knives 18.1, ... can be pivoted with respect to the knife holder 17 |
| TD | travelling direction of the baler |

## Claims

1. Agricultural harvester comprising
- a conveying device (25),
- a processing device (17, 18.1, 18.2, ...),
- at least one processing device actuator (33.1, 33.r, 51.1, 51.r), and
- a chamber (54) arranged for containing loose crop material and surrounded by at least one side wall (55.1, 55.r),
wherein the conveying device (25) is arranged to convey loose crop material in a conveying direction (CD) through a feeding channel (53) towards the chamber (54), wherein the processing device (17, 18.1, 18.2, ...) is movable with respect to the conveying device (25) between
- a processing position,
- a central remote position, and
- at least one lateral remote position,
wherein
- the processing device (17, 18.1, 18.2, ...) being in the processing position and
- the conveying device (25)
are arranged to cooperate and to jointly process loose crop material which is conveyed through the feeding channel (53),
wherein the processing device (17, 18.1, 18.2, ...) being in the central remote position has a larger distance to the conveying device (25) compared with the processing position, and
wherein the or at least one processing device actuator (33.1, 33.r, 51.l, 51.r) is arranged to move the processing device (17, 18.1, 18.2, ...) with respect to the conveying device (25)
- from the central remote position
- in a lateral moving direction (LD) being perpendicular or angular to the conveying direction (CD)
- into the or one lateral remote position,
**characterized in that**
the harvester further comprises
- at least one cover (40.1, 40.r) being moveable between a covering position and an access-enabling position and
- at least one cover position sensor (50.1, 50.r, 52.1, 52.r) assigned to the or one movable cover (40.1, 40.r),
wherein the or every cover (40.1, 40.r) being in the respective covering position covers from outside at least partially the feeding channel (53) and / or the or one side wall (55.1, 55.r) of the chamber (54),
wherein the or every cover (40.1, 40.r) being in the access-enabling position enables an access from outside to the feeding channel (53) and / or to the or one side wall (55.1, 55.r) of the chamber (54),
wherein the or every cover position sensor (50.1, 50.r, 52.1, 52.r) is arranged to detect whether the or at least one assigned cover (40.1, 40.r) is
- in the covering position or
- in the access-enabling position, and
wherein the harvester is arranged to inhibit the processing device actuator (33.1, 33.r, 51.l, 51.r) from moving the processing device (17, 18.1, 18.2, ...) into the or one lateral remote position being adjacent to the or one cover (40.1, 40.r)
if it is detected that this cover (40.1, 40.r) is in the covering position.

2. Agricultural harvester according to claim 1,
**characterized in that**
the harvester further comprises a cover opening actuator (46.1, 46.r),
wherein the cover opening actuator (46.1, 46.r) is arranged to move the or one cover (40.1, 40.r)
- from the covering position
- into the access-enabling position.

3. Agricultural harvester according to claim 2,
**characterized in that**
the harvester comprises an environment sensor,
wherein the environment sensor is arranged to detect whether or not a living being or an object is in the vicinity of the cover (40.1, 40.r) and
wherein the harvester is arranged to inhibit the cover opening actuator (46.1, 46.r) to move this cover (40.1, 40.r) from the covering position into the access-enabling position if the environment sensor has detected a living being or an object in the vicinity of the cover (40.1, 40.r).

4. Agricultural harvester according to one of the preceding claims,
**characterized in that**
the harvester comprises an environment sensor,
wherein the environment sensor is arranged to detect whether or not a living being or an object is in the vicinity of the or one cover (40.1, 40.r) and
wherein the harvester is arranged to trigger or to inhibit the processing device actuator (33.1, 33.r, 51.l, 51.r) to move the processing device (17, 18.1, 18.2, ...) in the or one lateral moving direction (LD) towards this cover (40.1, 40.r)
depending on signals from the environment sensor.

5. Agricultural harvester according to one of the preceding claims,
**characterized in that**
the harvester further comprises a cover closing actuator,
wherein the cover closing actuator is arranged to move the or one cover (40.1, 40.r)
- from the access-enabling position
- into the covering position and
wherein the harvester is arranged to inhibit the cover closing actuator to move this cover (40.1, 40.r) into the covering position
if the processing device (17, 18.1, 18.2, ...) is in the or one lateral remote position adjacent to this cover (40.1, 40.r).

6. Agricultural harvester according to claim 5,
**characterized in that**
the harvester comprises a processing device position sensor arranged to detect the current position of the processing device (17, 18.1, 18.2, ...),
wherein the harvester is arranged to trigger or to inhibit the cover closing actuator to move the cover (40.1, 40.r) into the covering position
depending on signals from the processing device position sensor.

7. Agricultural harvester according to one of the preceding claims,
**characterized in that**
the harvester comprises
- a locking device for the or one cover (40.1, 40.r) and
- a rotating part sensor,
wherein the locking device being in a locking mode locks the cover (40.1, 40.r) in the covering position,
wherein the locking device is transferable into a releasing mode in which it releases a movement of the cover (40.1, 40.r) into the access-enabling position,
wherein the rotating part sensor is arranged to check whether or not at least one part of the harvester is rotating, and
wherein the harvester is arranged to inhibit a transfer of the locking device into the releasing mode
if the rotating part sensor has detected at least one rotating part.

8. Agricultural harvester according to one of the preceding claims,
**characterized in that**
the harvester comprises a guiding surface (5, 24) which forms one wall of the feeding channel (53),
wherein the guiding surface (5, 24) is moveable with respect to the conveying device (25) in a direction perpendicular or angular to the conveying direction (CD)
- from a position aligned with the conveying device (25)
- into a lateral position,
wherein the processing device (17, 18.1, 18.2, ...) is mechanically connected with the guiding surface (5, 24), and
wherein a movement of the guiding surface (5, 24) into the lateral position causes a movement of the processing device (17, 18.1, 18.2, ...) into the or one lateral remote position.

9. Agricultural harvester according to one of the preceding claims,
**characterized in that**
the harvester comprises a guiding surface (5, 24) which forms one wall of the feeding channel (53),
wherein the processing device actuator (33.1, 33.r, 51.l, 51.r) is arranged to move the processing device (17, 18.1, 18.2, ...) with respect to the guiding surface (5, 24) and/or together with the guiding surface (5, 24)
in the or one lateral moving direction (LD) into the or one lateral remote position.

10. Agricultural harvester according to one of the preceding claims,
**characterized in that**
the harvester comprises a further processing device actuator (9.1, 9.r),
wherein the further processing device actuator (9.1, 9.r) tends to move the processing device (17, 18.1, 18.2, ...) with respect to the conveying device (25)
- from the central remote position
- into the processing position
and/or
- from the processing position
- into the central remote position

11. Agricultural harvester according to claim 10,
**characterized in that**
the harvester is arranged to inhibit the further processing device actuator (9.1, 9.r) to move the processing device (17, 18.1, 18.2, ...) into the processing position if it is detected that the or at least one cover (40.1, 40.r) is in the access-enabling position.

12. Agricultural harvester according to one of the preceding claims,
**characterized in that**
the harvester further comprises
- a further cover (40.r) being moveable between a further covering position and a further access-enabling position and
- a further cover position sensor (50.r, 52.r) assigned to the further cover (40.r),
wherein the further cover position sensor (50.r, 52.r) is arranged to detect whether the further cover (40.r) is
- in the further covering position or
- in the further access-enabling position,
wherein the feeding channel (53) and/or the chamber (54) is positioned between the cover (40.1) and the further cover (40.r),
wherein the processing device actuator (33.1, 33.r, 51.1, 51.r) is arranged to move the processing device (17, 18.1, 18.2, ...) selectively
- towards the cover (40.1) into the lateral remote position or
- towards the further cover (40.r) into a further lateral remote position, and
wherein the harvester is arranged to inhibit the processing device actuator (33.1, 33.r, 51.1, 51.r) to move the processing device (17, 18.1, 18.2, ...) into the further lateral position
if it is detected that the further cover (40.r) is in the further covering position.

13. Method for processing loose crop material
by using an agricultural harvester comprising
- a conveying device (25),
- a processing device (17, 18.1, 18.2, ...) being movable with respect to the conveying device (25) between a processing position, a central remote position, and at least one lateral remote position,
- at least one processing device actuator (33.1, 33.r, 51.l, 51.r), and
- a chamber (54) arranged for containing loose crop material and surrounded by at least one side wall (55.1, 55.r),
wherein the method comprises the steps that
- the conveying device (25) conveys loose crop material in a conveying direction (CD) through the feeding channel (53) towards the chamber (54) while the processing device (17, 18.1, 18.2, ...) is at least temporarily in the processing position,
- the processing device (17, 18.1, 18.2, ...) being in the processing position and the conveying device (25) cooperate and jointly process loose crop material while the crop material is conveyed through the feeding channel (53), and
- the conveyed and processed loose material is injected into the chamber (54), and
wherein the sequence is performed at least once that
- the processing device (17, 18.1, 18.2, ...) is moved out of the processing position into the central remote position such that the distance to the conveying device (25) in increased and
- the or at least one processing device actuator (33.1, 33.r, 51.1, 51.r) moves the processing device (17, 18.1, 18.2, ...) from the central remote position in a lateral moving direction (LD) being perpendicular or angular to the conveying direction (CD)into the or one lateral remote position,
**characterized in that**
the harvester further comprises
- at least one cover (40.1, 40.r) being moveable between a covering position and an access-enabling position and
- a cover position sensor (50.1, 50.r, 52.1, 52.r) assigned to the or one cover (40.1, 40.r),
wherein the steps of conveying, cutting and injecting the crop material are performed while the or every cover (40.1, 40.r)
- is in the covering position and
- covers from outside at least partially the feeding channel (53) and / or the or one side wall (55.1, 55.r) of the chamber (54),
wherein the or every cover (40.1, 40.r) being in the access-enabling position enables from outside an access to the feeding channel (53) and / or to the or one side wall (55.1, 55.r) of the chamber (54),
wherein the sequence comprises the further steps that
a request for moving the processing device (17, 18.1, 18.2, ...) into the or one lateral position and thereby towards the or one cover (40.1, 40.r) is received,
the assigned cover position sensor (50.1, 50.r, 52.1, 52.r) detects whether this cover (40.1, 40.r) is
- in the covering position or
- in the access-enabling position, and
the movement of the processing device (17, 18.1, 18.2, ...) in the lateral moving direction (LD) into the or one lateral remote position is automatically inhibited if the assigned cover position sensor (50.1, 50.r, 52.1, 52.r) detects that this cover (40.1, 40.r) is in the covering position.

14. Processing method according to claim 13,
**characterized in that**
the step that the processing device actuator (33.1, 33.r, 51.l, 51.r) moves the processing device (17, 18.1, 18.2, ...) into the lateral remote position is performed if the cover position sensor (50.1, 50.r, 52.1, 52.r) detects that this cover (40.1, 40.r) is in the access-enabling position.

15. Processing method according to claim 13 or claim 14,
**characterized in that**
the harvester comprises a further processing device actuator (9.1, 9.r),
wherein the method comprises the further step that
the further processing device actuator (9.1, 9.r) moves the processing device (17, 18.1, 18.2,...) into the processing position
if the or every assigned cover position sensor (50.1, 50.r, 52.1, 52.r) detects that the or every cover (40.1, 40.r) is in the covering position and
wherein the movement of the processing device (17, 18.1, 18.2,...) into the processing position is inhibited
if the or one assigned cover position sensor (50.1, 50.r, 52.1, 52.r) detects that the or one cover (40.1, 40.r) is in the access-enabling position.

## Patentansprüche

1. Landwirtschaftliche Erntemaschine, mit:
- einer Fördervorrichtung (25),
- einer Verarbeitungsvorrichtung (17, 18.1, 18.2,...),
- mindestens einem Verarbeitungsvorrichtungsaktuator (33.l, 33.r, 51.l, 51.r), und
- einer Kammer (54), die zum Aufnehmen von losem Erntegutmaterial angeordnet und von mindestens einer Seitenwand (55.l, 55.r) umgeben ist,
wobei die Fördervorrichtung (25) dazu angeordnet ist, loses Erntegutmaterial in einer Förderrichtung (CD) durch einen Zuführkanal (53) in Richtung auf die Kammer (54) zu fördern,
wobei die Verarbeitungsvorrichtung (17, 18.1, 18.2, ...) relativ zu der Fördervorrichtung (25) beweglich ist zwischen
- einer Verarbeitungsposition,
- einer zentralen entfernten Position, und
- mindestens einer seitlichen entfernten Position,
wobei
- die Verarbeitungsvorrichtung (17, 18.1, 18.2, ...), wenn sie sich in der Verarbeitungsposition befindet, und
- die Fördervorrichtung (25)
dazu angeordnet sind, zusammenzuarbeiten und gemeinsam loses Erntegutmaterial zu verarbeiten, das durch den Zuführkanal (53) gefördert wird,
wobei die Verarbeitungsvorrichtung (17, 18.1, 18.2, ...), wenn sie sich in der zentralen entfernten Position befindet, im Vergleich mit der Verarbeitungsposition einen größeren Abstand zu der Fördervorrichtung (25) besitzt, und
wobei der oder mindestens ein Verarbeitungsvorrichtungsaktuator (33.l, 33.l, 51.l, 51.r) dazu angeordnet ist, die Verarbeitungsvorrichtung (17, 18.1, 18.2, ...) relativ zu der Fördervorrichtung (25)
- von der zentralen entfernten Position
- in einer Längsbewegungsrichtung (LD), die senkrecht oder winklig zu der Förderrichtung (CD) liegt,
- in die oder eine seitliche entfernte Position
zu bewegen,
**dadurch gekennzeichnet, dass**
die Erntemaschine weiterhin Folgendes umfasst:
- mindestens eine zwischen einer Abdeckposition und einer zugangsermöglichenden Position bewegliche Abdeckung (40.l, 40.r) und
- mindestens einen Abdeckungspositionssensor (50.l, 50.r, 52.l, 52.r), der der oder einer beweglichen Abdeckung (40.l, 40.r) zugeordnet ist,
wobei die oder jede Abdeckung (40.l, 40.r), wenn sie sich in der jeweiligen Abdeckposition befindet, von außen mindestens teilweise den Zuführkanal (53) und/oder die oder eine Seitenwand (55.l, 55.r) der Kammer (54) abdeckt,
wobei die oder jede Abdeckung (40.140.r), wenn sie sich in der zugangsermöglichenden Position befindet, einen Zugang von außen zu dem Zuführkanal (53) und/oder der oder einer Seitenwand (55.l, 55.r) der Kammer (54) ermöglicht,
wobei der oder jeder Abdeckungspositionssensor (50.l, 50.r, 52.l, 52.r) dazu angeordnet ist, zu detektieren, ob sich die oder mindestens eine zugeordnete Abdeckung (40.l, 40.r)
- in der Abdeckposition oder
- in der zugangsermöglichenden Position
befindet, und
wobei die Erntemaschine dazu angeordnet ist, den Verarbeitungsvorrichtungsaktuator (33.l, 33.r, 51.l, 51.r) daran zu hindern, die Verarbeitungsvorrichtung (17, 18.1, 18.2, ...) in die oder eine seitliche entfernte Position benachbart zu der oder einer Abdeckung (40.l, 40.r) zu bewegen, wenn detektiert wird, dass sich diese Abdeckung (40.l, 40.r) in der Abdeckposition befindet.

2. Landwirtschaftliche Erntemaschine nach Anspruch 1,
**dadurch gekennzeichnet, dass**
die Erntemaschine weiterhin einen Abdeckungsöffnungsaktuator (46.l, 46.r) aufweist,
wobei der Abdeckungsöffnungsaktuator (46.l, 46.r) dazu angeordnet ist, die oder eine Abdeckung (40.1, 40.r)
- von der Abdeckposition
- in die zugangsermöglichende Position
zu bewegen.

3. Landwirtschaftliche Erntemaschine nach Anspruch 2,
**dadurch gekennzeichnet, dass**
die Erntemaschine einen Umweltsensor aufweist,
wobei der Umweltsensor dazu angeordnet ist, zu detektieren, ob sich ein Lebewesen oder ein Objekt in der Nähe der Abdeckung (40.l, 40.r) befindet oder nicht, und
wobei die Erntemaschine dazu angeordnet ist, den Abdeckungsöffnungsaktuator (46.l, 46.r) daran zu hindern, diese Abdeckung (40.l, 40.r) von der Abdeckposition in die zugangsermöglichende Position zu bewegen,
wenn der Umweltsensor ein Lebewesen oder ein Objekt in der Nähe der Abdeckung (40.l, 40.r) detektiert hat.

4. Landwirtschaftliche Erntemaschine nach einem der vorhergehenden Ansprüche,
**dadurch gekennzeichnet, dass**
die Erntemaschine einen Umweltsensor aufweist,
wobei der Umweltsensor dazu angeordnet ist, zu detektieren, ob ein sich ein Lebewesen oder ein Objekt in der Nähe der oder einer Abdeckung (40.l, 40.r) befindet, und
wobei die Erntemaschine dazu angeordnet ist, den Verarbeitungsvorrichtungsaktuator (33.l, 33.r, 51.l, 51.r) dazu zu veranlassen oder ihn daran zu hindern, die Verarbeitungsvorrichtung (17, 18.1, 18.2, ...) in der oder einer Seitwärtsbewegungsrichtung (LD) in Richtung auf diese Abdeckung (40.l, 40.r) zu bewegen
in Abhängigkeit von Signalen von dem Umweltsensor.

5. Landwirtschaftliche Erntemaschine nach einem der vorhergehenden Ansprüche,
**dadurch gekennzeichnet, dass**
die Erntemaschine weiterhin einen Abdeckungsschließaktuator aufweist,
wobei der Abdeckungsschließaktuator dazu angeordnet ist, die oder eine Abdeckung (40.l, 40.r)
- von der zugangsermöglichenden Position
- in die Abdeckposition
zu bewegen, und
wobei die Erntemaschine dazu angeordnet ist, den Abdeckungsschließaktuator daran zu hindern, diese Abdeckung (40.l, 40.r) in die Abdeckposition zu bewegen,
wenn sich die Verarbeitungsvorrichtung (17, 18.1, 18.2, ...) in der oder einer seitlichen entfernten Position benachbart dieser Abdeckung (40.l, 40.r) befindet.

6. Landwirtschaftliche Erntemaschine nach Anspruch 5,
**dadurch gekennzeichnet, dass**
die Erntemaschine einen Verarbeitungsvorrichtungspositionssensor aufweist, der dafür angeordnet ist, die momentane Position der Verarbeitungsvorrichtung (17, 18.1, 18.2, ...) zu detektieren,
wobei die Erntemaschine dazu angeordnet ist, den Abdeckungsschließaktuator dazu zu veranlassen oder daran zu hindern, die Abdeckung (40.l, 40.r) in die Abdeckposition zu bewegen,
in Abhängigkeit von Signalen des Verarbeitungsvorrichtungspositionssensors.

7. Landwirtschaftliche Erntemaschine nach einem der vorhergehenden Ansprüche,
**dadurch gekennzeichnet, dass**
die Erntemaschine Folgendes aufweist:
- eine Sperrvorrichtung für die oder eine Abdeckung (40.l, 40.r) und
- einen Rotationsteilsensor,
wobei die Sperrvorrichtung, wenn sie sich in einem Sperrmodus befindet, die Abdeckung (40.l, 40.r) in der Abdeckposition sperrt,
wobei die Sperrvorrichtung in einen Lösemodus überführbar ist, in der sie eine Bewegung der Abdeckung (40.l, 40.r) in die zugangsermöglichende Position freigibt,
wobei der Rotationsteilsensor dazu angeordnet ist, zu prüfen, ob mindestens ein Teil der Erntemaschine rotiert oder nicht, und
wobei die Erntemaschine dazu angeordnet ist, eine Überführung der Sperrvorrichtung in den Lösemodus zu verhindern,
wenn der Rotationsteilsensor mindestens ein rotierendes Teil detektiert hat.

8. Landwirtschaftliche Erntemaschine nach einem der vorhergehenden Ansprüche,
**dadurch gekennzeichnet, dass**
die Erntemaschine eine Führungsfläche (5, 24) aufweist, die eine Wand des Zuführkanals (53) formt,
wobei die Führungsfläche (5, 24) in einer Richtung senkrecht oder winklig zu der Förderrichtung (CD) relativ zu der Fördervorrichtung (25) beweglich ist
- von einer Position, die an der Fördervorrichtung (21) ausgerichtet ist,
- in eine seitliche Position,
wobei die Verarbeitungsvorrichtung (17, 18.1, 18.2, ...) mechanisch mit der Führungsfläche (5, 24) verbunden ist, und
wobei eine Bewegung der Führungsfläche (5, 24) in die seitliche Position eine Bewegung der Verarbeitungsvorrichtung (17, 18.1, 18.2, ...) in die oder mindestens eine seitliche entfernte Position bewirkt.

9. Landwirtschaftliche Erntemaschine nach einem der vorhergehenden Ansprüche,
**dadurch gekennzeichnet, dass**
die Erntemaschine eine Führungsfläche (5, 24) aufweist, die eine Wand des Zuführkanals (53) bildet,
wobei der Verarbeitungsvorrichtungsaktuator (33.l, 33.r, 51.l, 51.r) dazu angeordnet ist, die Verarbeitungsvorrichtung (17, 18.1, 18.2, ...) relativ zu der Führungsfläche (5, 24) und/oder zusammen mit der Führungsfläche (5, 24) zu bewegen
in der oder einer seitlichen Bewegungsrichtung (LD) in die oder eine seitliche entfernte Position.

10. Landwirtschaftliche Erntemaschine nach einem der vorhergehenden Ansprüche,
**dadurch gekennzeichnet, dass**
die Erntemaschine einen weiteren Verarbeitungsvorrichtungsaktuator (9.l, 9.r) aufweist,
wobei der weitere Verarbeitungsvorrichtungsaktuator (9.l, 9.r) danach strebt, die Verarbeitungsvorrichtung (17, 18.1, 18.2, ...) relativ zu der Fördervorrichtung (25)
- von der zentralen entfernten Position
- in die Verarbeitungsposition
und/oder
- von der Verarbeitungsposition
- in die zentrale entfernte Position
zu bewegen.

11. Landwirtschaftliche Erntemaschine nach Anspruch 10,
**dadurch gekennzeichnet, dass**
die Erntemaschine dazu angeordnet ist, den weiteren Verarbeitungsvorrichtungsaktuator (9.l, 9.r) daran zu hindern, die Verarbeitungsvorrichtung (17, 18.1, 18.2, ...) in die Verarbeitungsposition zu bewegen,
wenn detektiert wird, dass sich die oder mindestens eine Abdeckung (40.l, 40.r) in der zugangsermöglichenden Position befindet.

12. Landwirtschaftliche Erntemaschine nach einem der vorhergehenden Ansprüche, **dadurch gekennzeichnet, dass**
die Erntemaschine weiterhin Folgendes aufweist:
- eine weitere Abdeckung (40.r), die zwischen einer weiteren Abdeckposition und einer weiteren zugangsermöglichenden Position beweglich ist, und
- einen weiteren Abdeckungspositionssensor (50.r, 52.r), der der weiteren Abdeckung (40.r) zugeordnet ist,
wobei der weitere Abdeckungspositionssensor (50.r, 52.r) dazu angeordnet ist, zu detektieren, ob sich die weitere Abdeckung (40.r)
- in der weiteren Abdeckposition oder
- in der weiteren zugangsermöglichende Position,
befindet,
wobei der Zuführkanal (53) und/oder die Kamera (54) zwischen der Abdeckung (40.l) und der weiteren Abdeckung (40.r) positioniert ist,
wobei der Verarbeitungsvorrichtungsaktuator (33.l, 33.r, 51.l, 51.r) dazu angeordnet ist, die Verarbeitungsvorrichtung (17, 18.1, 18.2, ...) wahlweise
- in Richtung auf die Abdeckung (40.l) in die seitliche entfernte Position oder
- in Richtung auf die weitere Abdeckung (40.r) in eine weitere seitliche entfernte Position zu bewegen, und
wobei die Erntemaschine dazu angeordnet ist, den Verarbeitungsvorrichtungsaktuator (33.l, 33.r, 51.l, 51.r) daran zu hindern, die Verarbeitungsvorrichtung (17, 18.1, 18.2, ...) in die weitere seitliche Position zu bewegen,
wenn detektiert wird, dass sich die weitere Abdeckung (40.r) in der weiteren Abdeckposition befindet.

13. Verfahren zum Verarbeiten losen Erntegutmaterials
unter Verwendung einer landwirtschaftlichen Erntemaschine, mit:
- einer Fördervorrichtung (25),
- einer Verarbeitungsvorrichtung (17, 18.1, 18.2, ...), die relativ zu der Fördervorrichtung (25) zwischen einer Verarbeitungsposition, einer zentralen entfernten Position und mindestens einer seitlichen entfernten Position beweglich ist,
- mindestens einem Verarbeitungsvorrichtungsaktuator (33.l, 33.r, 51.l, 51.r) und
- einer Kammer (54), die zum Aufnehmen von losem Erntegutmaterial angeordnet und von mindestens einer Seitenwand (55.l, 55.r) umgeben ist,
wobei das Verfahren die Schritte aufweist, dass
- die Fördervorrichtung (25) loses Erntegutmaterial in einer Förderrichtung (CD) durch den Zuführkanal (53) in Richtung auf die Kammer (54) fördert, während sich die Verarbeitungsvorrichtung (17, 18.1, 18.2, ...) mindestens zeitweise in der Verarbeitungsposition befindet,
- die Verarbeitungsvorrichtung (17, 18.1, 18.2, ...), wenn sie sich in der Verarbeitungsposition befindet, und die Fördervorrichtung (25) zusammenarbeiten und gemeinsam loses Erntegutmaterial verarbeiten, während das Erntegutmaterial durch den Zuführkanal (53) gefördert wird, und
- das geförderte und verarbeitete lose Material in die Kammer (54) eingeführt wird und
wobei die Abfolge mindestens einmal durchgeführt wird, dass
- die Verarbeitungsvorrichtung (17, 18.1, 18.2, ...) aus der Verarbeitungsposition in die zentrale entfernte Position bewegt wird, sodass der Abstand der Fördervorrichtung (25) vergrößert wird, und
- der oder mindestens ein Verarbeitungsvorrichtungsaktuator (33.l, 33.r, 51.l, 51.r) die Verarbeitungsvorrichtung (17, 18.1, 18.2, ...) von der zentralen entfernten Position in eine seitliche Bewegungsrichtung (LD), die senkrecht oder winklig zu der Förderrichtung (CD) liegt, in die oder eine seitliche entfernte Position bewegt,
**dadurch gekennzeichnet, dass**
die Erntemaschine weiterhin Folgendes aufweist:
- mindestens eine Abdeckung (40.l, 40.r), die zwischen einer Abdeckposition und einer zugangsermöglichenden Position beweglich ist, und
- einen der oder einer Abdeckung (40.l, 40.r) zugeordneten Abdeckungspositionssensor (50.l, 50.r, 52.l, 52.r),
wobei die Schritte des Förderns, Schneidens und Einführens des Materials durchgeführt werden, während die oder jede Abdeckung (40.l, 40.r)
- sich in der Abdeckposition befindet und
- von außen mindestens teilweise den Zuführkanal (53) und/oder die oder eine Seitenwand (55.l, 55.r) der Kammer (54) bedeckt,
wobei die oder jede Abdeckung (40.l, 40.r), wenn sie sich in der zugangsermöglichenden Position befindet, von außen einen Zugang zu dem Zuführkanal (53) und/oder zu der oder einer Seitenwand (55.l, 55.r) der Kammer (54) ermöglicht,
wobei die Abfolge die weiteren Schritte aufweist, dass
eine Anfrage zum Bewegen der Verarbeitungsvorrichtung (17, 18.1, 18.2, ...) in die oder eine seitliche Position und dadurch in Richtung auf die oder eine Abdeckung (40.l, 40.r) empfangen wird,
der zugeordneten Abdeckungspositionssensor (50.l, 50.r, 52.l, 52.r) detektiert, ob sich diese Abdeckung (40.l, 40.r)
- in der Abdeckposition oder
- in der zugangsermöglichenden Position befindet, und
die Bewegung der Vorrichtung (17, 18.1, 18.2, ...) in der seitlichen Bewegungsrichtung (LD) in die oder eine seitliche entfernte Position automatisch verhindert wird,
wenn der zugeordnete Abdeckungspositionssensor (50.l, 50.r, 52.l, 52.r) detektiert, dass sich diese Abdeckung (40.l, 40.r) in der Abdeckposition befindet.

14. Verarbeitungsverfahren nach Anspruch 13,
**dadurch gekennzeichnet, dass**
der Schritt, dass der Verarbeitungsvorrichtungsaktuator (33.l, 33.r, 51.l, 51.r) die Verarbeitungsvorrichtung (17, 18.1, 18.2, ...) in die seitliche entfernte Position bewegt, ausgeführt wird, wenn der Abdeckungspositionssensor (50.l, 50.r, 52.l, 52.r) detektiert, dass sich diese Abdeckung (40.l, 40.r) in der zugangsermöglichenden Position befindet.

15. Verarbeitungsverfahren nach Anspruch 13 oder Anspruch 14,
**dadurch gekennzeichnet, dass**
die Erntemaschine einen weiteren Verarbeitungsvorrichtungsaktuator (9.l, 9.r) aufweist,
wobei das Verfahren den weiteren Schritt aufweist, dass
der weitere Verarbeitungsvorrichtungsaktuator (9.l, 9.r) die Verarbeitungsvorrichtung (17, 18.1, 18.2,...) in die Verarbeitungsposition bewegt,
wenn der oder jeder zugeordnete Abdeckungspositionssensor (50.l, 50.r, 52.l, 52.r) detektiert, dass sich die oder jede Abdeckung (40.l, 40.r) in der Abdeckposition befindet, und
wobei die Bewegung der Verarbeitungsvorrichtung (17, 18.1, 18.2,...) in die Verarbeitungsposition verhindert wird,
wenn der oder ein zugeordneter Abdeckungspositionssensor (50.l, 50.r, 52.l, 52.r) detektiert, dass sich die oder eine Abdeckung (40.l, 40.r) in der zugangsermöglichenden Position befindet.

## Revendications

1. Moissonneuse agricole comprenant
un dispositif de transfert (25),
un dispositif de traitement (17, 18.1, 18.2, ...),
au moins un actionneur de dispositif de traitement (33.1, 33.r, 51.1, 51.r), et
un compartiment (54) agencé afin de contenir une matière à récolter libre et entouré par au moins une paroi latérale (55.1, 55.r),
dans laquelle le dispositif de transfert (25) est agencé afin de transférer de la matière à récolter libre dans une direction de transfert (CD) à travers un canal d'alimentation (53) vers le compartiment (54), dans laquelle le dispositif de traitement (17, 18.1, 18.2, ...) peut être déplacé par rapport au dispositif de transfert (25) entre
une position de traitement,
une position centrale distante, et
au moins une position latérale distante,
dans laquelle
le dispositif de traitement (17, 18.1, 18.2, ...) qui est dans la position de traitement et
le dispositif de transfert (25)
sont agencés afin de coopérer et de traiter conjointement la matière à récolter libre qui est transférée à travers le canal d'alimentation (53),
dans laquelle le dispositif de traitement (17, 18.1, 18.2, ...) lorsqu'il est dans la position centrale distante présente une distance supérieure par rapport au dispositif de transfert (25) par comparaison à la position de traitement, et
dans laquelle le ou au moins un actionneur de dispositif de traitement (33.1, 33.r, 51.1, 51.r) est agencé afin de déplacer le dispositif de traitement (17, 18.1, 18.2, ...) par rapport au dispositif de transfert (25)
à partir de la position centrale distante
suivant une direction de déplacement latérale (LD) qui est perpendiculaire ou inclinée par rapport à la direction de transfert (CD)
vers la ou une position latérale distante,
**caractérisée en ce que**
la moissonneuse comprend, en outre :
au moins un couvercle (40.1, 40.r) qui peut être déplacé entre une position de fermeture et une position permettant l'accès et
au moins un capteur de position de couvercle (50.1, 50.r, 52.1, 52.r) affecté au ou à un couvercle pouvant être déplacé (40.1, 40.r),
dans laquelle le ou chaque couvercle (40.1, 40.r), lorsqu'il est dans la position de fermeture respective, recouvre au moins partiellement, à partir de l'extérieur, le canal d'alimentation (53) et/ou la ou une paroi latérale (55.1, 55.r) du compartiment (54),
dans laquelle le ou chaque couvercle (40.1, 40.r), lorsqu'il est dans la position permettant l'accès, permet un accès à partir de l'extérieur au canal d'alimentation (53) et/ou à la ou une paroi latérale (55.1, 55.r) du compartiment (54),
dans laquelle le ou chaque capteur de position de couvercle (50.1, 50.r, 52.1, 52.r) est agencé afin de détecter si le ou au moins un couvercle (40.1, 40.r) affecté est
dans la position de fermeture ou
dans la position permettant l'accès, et
dans laquelle la moissonneuse est agencée de manière à empêcher l'actionneur de dispositif de traitement (33.1, 33.r, 51.1, 51.r) de déplacer le dispositif de traitement (17, 18.1, 18.2, ...) dans la ou une position latérale distante qui est adjacente au ou à un couvercle (40.1, 40.r)
s'il est détecté que ce couvercle (40.1, 40.r) est dans la position de fermeture.

2. Moissonneuse agricole selon la revendication 1,
**caractérisée en ce que**
la moissonneuse comprend, en outre, un actionneur d'ouverture de couvercle (46.1, 46.r),
dans laquelle l'actionneur d'ouverture de couvercle (46.1, 46.r) est agencé afin de déplacer le ou un couvercle (40.1, 40.r)
à partir de la position de fermeture
vers la position permettant l'accès.

3. Moissonneuse agricole selon la revendication 2,
**caractérisée en ce que**
la moissonneuse comprend un capteur d'environnement,
dans laquelle le capteur d'environnement est agencé afin de détecter si un être vivant ou un objet est à proximité du couvercle (40.1, 40.r) et
dans laquelle la moissonneuse est agencée de manière à empêcher l'actionneur d'ouverture de couvercle (46.1, 46.r) de déplacer ce couvercle (40.1, 40.r) à partir de la position de fermeture vers la position permettant l'accès si le capteur d'environnement a détecté un être vivant ou un objet à proximité du couvercle (40.1, 40.r).

4. Moissonneuse agricole selon l'une des revendications précédentes,
**caractérisée en ce que**
la moissonneuse comprend un capteur d'environnement,
dans laquelle le capteur d'environnement est agencé afin de détecter si un être vivant ou un objet est ou non à proximité du ou d'un couvercle (40.1, 40.r) et
dans laquelle la moissonneuse est agencée afin d'autoriser ou d'empêcher le déplacement du dispositif de traitement (17, 18.1, 18.2, ...) par l'actionneur de dispositif de traitement (33.1, 33.r, 51.1, 51.r) suivant la ou une direction de déplacement latérale (LD) vers ce couvercle (40.1, 40.r) en fonction des signaux provenant du capteur d'environnement.

5. Moissonneuse agricole selon l'une des revendications précédentes,
**caractérisée en ce que**
la moissonneuse comprend, en outre, un actionneur de fermeture de couvercle,
dans laquelle l'actionneur de fermeture de couvercle est agencé afin de déplacer le ou un couvercle (40.1, 40.r)
à partir de la position permettant l'accès
vers la position de fermeture et
dans laquelle la moissonneuse est agencée afin d'empêcher l'actionneur de fermeture de couvercle de déplacer ce couvercle (40.1, 40.r) vers la position de fermeture
si le dispositif de traitement (17, 18.1, 18.2, ...) est dans la ou une position latérale distante adjacente à ce couvercle (40.1, 40.r).

6. Moissonneuse agricole selon la revendication 5,
**caractérisée en ce que**
la moissonneuse comprend un capteur de position de dispositif de traitement agencé afin de détecter la position courante du dispositif de traitement (17, 18.1, 18.2, ...),
dans laquelle la moissonneuse est agencée afin d'autoriser ou d'empêcher le déplacement du couvercle (40.1, 40.r) par l'actionneur de fermeture de couvercle vers la position de fermeture
en fonction de signaux du capteur de position de dispositif de traitement.

7. Moissonneuse agricole selon l'une des revendications précédentes,
**caractérisée en ce que**
la moissonneuse comprend
un dispositif de verrouillage pour le ou un couvercle (40.1, 40.r) et
un capteur de partie tournante,
dans laquelle le dispositif de verrouillage placé en mode de verrouillage verrouille le couvercle (40.1, 40.r) dans la position de fermeture,
dans laquelle le dispositif de verrouillage peut être transféré vers un mode de libération dans lequel il libère un mouvement du couvercle (40.1, 40.r) vers la position permettant l'accès,
dans laquelle le capteur de partie tournante est agencé afin de contrôler si au moins une partie de la moissonneuse tourne ou non, et
dans laquelle la moissonneuse est agencée afin d'empêcher un transfert du dispositif de verrouillage dans le mode de libération
si le capteur de partie tournante a détecté au moins une partie tournante.

8. Moissonneuse agricole selon l'une des revendications précédentes,
**caractérisée en ce que**
la moissonneuse comprend une surface de guidage (5, 24) qui forme une paroi du canal d'alimentation (53),
dans laquelle la surface de guidage (5, 24) peut être déplacée par rapport au dispositif de transfert (25) dans une direction perpendiculaire ou inclinée par rapport à la direction de transfert (CD)
à partir d'une position alignée avec le dispositif de transfert (25)
vers une position latérale,
dans laquelle le dispositif de traitement (17, 18.1, 18.2, ...) est relié mécaniquement à la surface de guidage (5, 24), et
dans laquelle un mouvement de la surface de guidage (5, 24) vers la position latérale provoque un mouvement du dispositif de traitement (17, 18.1, 18.2, ...) vers la ou une position latérale distante.

9. Moissonneuse agricole selon l'une des revendications précédentes,
**caractérisée en ce que**
la moissonneuse comprend une surface de guidage (5, 24) qui forme une paroi du canal d'alimentation (53),
dans laquelle l'actionneur de dispositif de traitement (33.1, 33.r, 51.1, 51.r) est agencé afin de déplacer le dispositif de traitement (17, 18.1, 18.2, ...) par rapport à la surface de guidage (5, 24) et/ou ensemble avec la surface de guidage (5, 24)
suivant la ou une direction de déplacement latérale (LD) vers la ou une position latérale distante.

10. Moissonneuse agricole selon l'une des revendications précédentes,
**caractérisée en ce que**
la moissonneuse comprend un autre actionneur de dispositif de traitement (9.1, 9.r),
dans laquelle l'autre actionneur de dispositif de traitement (9.1, 9.r) tend à déplacer le dispositif de traitement (17, 18.1, 18.2, ...) par rapport au dispositif de transfert (25)
à partir de la position centrale distante
vers la position de traitement
et/ou
à partir de la position de traitement
vers la position centrale distante

11. Moissonneuse agricole selon la revendication 10,
**caractérisée en ce que**
la moissonneuse est agencée afin d'empêcher l'autre actionneur de dispositif de traitement (9.1, 9.r) de déplacer le dispositif de traitement (17, 18.1, 18.2, ...) vers la position de traitement
s'il est détecté que le ou au moins une couvercle (40.1, 40.r) est dans la position permettant l'accès.

12. Moissonneuse agricole selon l'une des revendications précédentes,
**caractérisée en ce que**
la moissonneuse comprend, en outre,
un autre couvercle (40.r) pouvant être déplacé entre une autre position de fermeture et une autre position permettant l'accès et
un autre capteur de position de couvercle (50.r, 52.r) affecté à l'autre couvercle (40.r), dans laquelle l'autre capteur de position de couvercle (50.r, 52.r) est agencé afin de détecter si l'autre couvercle (40.r) est
dans l'autre position de fermeture ou
dans l'autre position permettant l'accès,
dans laquelle le canal d'alimentation (53) et/ou le compartiment (54) est positionné entre le couvercle (40.1) et l'autre couvercle (40.r),
dans laquelle l'actionneur de dispositif de traitement (33.1, 33.r, 51.1, 51.r) est agencé afin de déplacer le dispositif de traitement (17, 18.1, 18.2, ...) de manière sélective
vers le couvercle (40.1) vers la position latérale distante ou
vers l'autre couvercle (40.r) vers une autre position latérale distante, et
dans laquelle la moissonneuse est agencée afin d'empêcher l'actionneur de dispositif de traitement (33.1, 33.r, 51.1, 51.r) de déplacer le dispositif de traitement (17, 18.1, 18.2, ...) vers l'autre position latérale
s'il est détecté que l'autre couvercle (40.r) est dans l'autre position de fermeture.

13. Procédé de traitement de matière à récolter libre en utilisant une moissonneuse agricole comprenant
un dispositif de transfert (25),
un dispositif de traitement (17, 18.1, 18.2, ...) pouvant être déplacé par rapport au dispositif de transfert (25) entre une position de traitement, une position centrale distante et au moins une position latérale distante,
au moins un actionneur de dispositif de traitement (33.1, 33.r, 51.1, 51.r), et
un compartiment (54) agencé afin de contenir de la matière à récolter libre et entouré par au moins une paroi latérale (55.1, 55.r),
dans lequel le procédé comprend les étapes dans lesquelles
le dispositif de transfert (25) transfère la matière à récolter libre suivant une direction de transfert (CD) à travers le canal d'alimentation (53) vers le compartiment (54) alors que le dispositif de traitement (17, 18.1, 18.2, ...) est au moins temporairement dans la position de traitement,
le dispositif de traitement (17, 18.1, 18.2, ...) qui est dans la position de traitement et le dispositif de transfert (25) coopèrent et traitent conjointement la matière à récolter libre alors que la matière à récolter est transférée à travers le canal d'alimentation (53), et
la matière libre transférée et traitée est injectée dans le compartiment (54), et
dans lequel la séquence suivante est mise en oeuvre au moins une fois
le dispositif de traitement (17, 18.1, 18.2, ...) est déplacé à partir de la position de traitement vers la position centrale distante de telle sorte que la distance par rapport au dispositif de transfert (25) est augmentée et
le ou au moins un actionneur de dispositif de traitement (33.1, 33.r, 51.1, 51.r) déplace le dispositif de traitement (17, 18.1, 18.2, ...) à partir de la position centrale distante suivant une direction de déplacement latérale (LD) qui est perpendiculaire ou inclinée par rapport à la direction de transfert (CD) vers la ou une position latérale distante,
**caractérisé en ce que**
la moissonneuse comprend, en outre,
au moins un couvercle (40.1, 40.r) qui peut être déplacé entre une position de fermeture et une position permettant l'accès et
un capteur de position de couvercle (50.1, 50.r, 52.1, 52.r) affecté au ou à un couvercle (40.1, 40.r),
dans lequel les étapes de transfert, de coupe et d'injection de la matière à récolter sont exécutées alors que le ou chaque couvercle (40.1, 40.r)
est dans la position de fermeture et
recouvre depuis l'extérieur au moins partiellement le canal d'alimentation (53) et/ou la ou une paroi latérale (55.1, 55.r) du compartiment (54),
dans lequel le ou chaque couvercle (40.1, 40.r) qui est dans la position permettant l'accès assure, à partir de l'extérieur, un accès au canal d'alimentation (53) et/ou à la ou une paroi latérale (55.1, 55.r) du compartiment (54),
dans lequel la séquence comprend les étapes supplémentaires dans lesquelles
une demande de déplacement du dispositif de traitement (17, 18.1, 18.2, ...) vers la ou une position latérale et ainsi vers le ou un couvercle (40.1, 40.r) est reçue,
le capteur de position de couvercle (50.1, 50.r, 52.1, 52.r) affecté détecte si ce couvercle (40.1, 40.r) est
dans la position de fermeture ou
dans la position permettant l'accès, et
le mouvement du dispositif de traitement (17, 18.1, 18.2, ...) dans la direction de déplacement latérale (LD) vers la ou une position latérale distante est empêché automatiquement si le capteur de position de couvercle (50.1, 50.r, 52.1, 52.r) affecté détecte que ce couvercle (40.1, 40.r) est dans la position de fermeture.

14. Procédé de traitement selon la revendication 13,
**caractérisé en ce que**
l'étape dans laquelle l'actionneur de dispositif de traitement (33.1, 33.r, 51.1, 51.r) déplace le dispositif de traitement (17, 18.1, 18.2, ...) vers la position latérale distante est mise en oeuvre si le capteur de position de couvercle (50.1, 50.r, 52.1, 52.r) détecte que ce couvercle (40.1, 40.r) est dans la position permettant l'accès.

15. Procédé de traitement selon la revendication 13 ou 14,
**caractérisé en ce que**
la moissonneuse comprend un autre actionneur de dispositif de traitement (9.1, 9.r),
dans lequel le procédé comprend l'étape supplémentaire dans laquelle
l'autre actionneur de dispositif de traitement (9.1, 9.r) déplace le dispositif de traitement (17, 18.1, 18.2, ...) dans la position de traitement
si le ou chaque capteur de position de couvercle (50.1, 50.r, 52.1, 52.r) affecté détecte que le ou chaque couvercle (40.1, 40.r) est dans la position de fermeture et
dans lequel le mouvement du dispositif de traitement (17, 18.1, 18.2, ...) dans la position de traitement est empêché
si le ou un capteur de position de couvercle (50.1, 50.r, 52.1, 52.r) affecté détecte que le ou un couvercle (40.1, 40.r) est dans la position permettant l'accès.
